# FASCICULE DE BREVET EUROPEEN

(11) **EP 0 696 416 B1**
(45) Date de publication et mention de la délivrance du brevet: **12.12.2001**
(21) Numéro de dépôt: 95440048.7
(22) Date de dépôt: 02.08.1995
(51) Int. Cl.: A01G 3/04

(54) **Machine de coupe utilisable notamment pour la taille ou prétaille de vignes palissées**
Schneidemaschine, insbesondere zum Gebrauch für den Schnitt und Vorschnitt der Weinstöcke in Drahtrahmenanlagen
Cutting machine to be used especially for pruning and pre-pruning tied vines

(30) Priorité: 11.08.1994 FR 9410059
(43) Date de publication de la demande: 14.02.1996
(73) Titulaire: BINGER FRANCE SARL, 68127 Niederhergheim (FR)
(72) Inventeur: Andelfinger, Georges, F-68127 Niederhergheim (FR)

(56) Documents cités:
- EP-A- 0 147 344
- DE-C- 4 037 590
- FR-A- 2 576 481
- FR-A- 2 635 251

## Description

La présente invention porte sur une machine de coupe utilisable notamment pour la taille ou prétaille de vignes palissées selon le préambule de la revendication 1.

On note qu'en lieu et place du module-ameneur associé à un module de coupe - solution privilégiée - il est possible de prévoir un deuxième module de coupe répondant aux mêmes particularités que celles du premier évoqué plus haut.

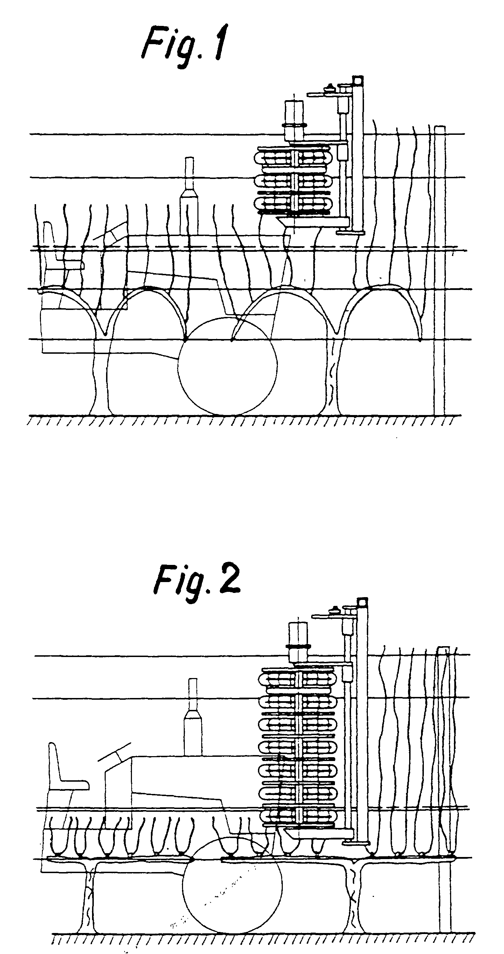

Avant d'aborder l'ensemble des problèmes qui se posent, rappelons en premier lieu que les vignes palissées se présentent sous différents types de taille. Citons parmi ceux-ci la taille en demi-arc ou taille en guyot (Fig. 1) ou la taille dite en cordon de royat (Fig. 2) et que les travaux de taille sont effectués sur une période d'environ 6 mois après les vendanges. Avec le type de taille guyot, le niveau de coupe est relativement haut, les sarments sont souples et la végétation est en général peu importante et assez régulière. La mise en oeuvre de machines de coupe dans les vignes répondant à ce type de taille n'est pas trop délicate (sous réserve d'éventuelles difficultés invoquées plus loin). En revanche, avec le type de taille en cordon, le niveau de coupe est bas (en général directement au-dessus du fil inférieur), les sarments-porteurs ou coursons sont rigides et la végétation est dense et assez irrégulière. On comprend qu'il est ici nettement moins évident et moins facile d'exécuter un travail de qualité. Et la difficulté se trouve renforcée encore du fait que le ménagement desdits coursons est d'importance primordiale, la rupture ou l'endommagement de ceux-ci compromettant la récolte future.

Par ailleurs, et indépendamment du type de taille, les machines de coupe évoluent non rarement dans des conditions difficiles, dues au relief (terrains accidentés) et/ou à la présence de toute sorte d'obstacles (autres que les piquets) (souches par exemple) et/ou encore aux états médiocres du palissage (fils détendus, rouillés, proche de la limite d'élasticité mécanique, etc.).

Les problèmes rencontrés sur ce type de machine de coupe ou buts à atteindre sont nombreux et variés
- ménagement des poteaux (échalas, piquets métalliques ou en matière synthétique), des tendeurs de fils et des fils ;
- Confort d'utilisation et fiabilité : automatisation optimale, sécurité d'emploi, réduction des sollicitations des éléments mécaniques composant la machine ;
- Régularité de l'alimentation ;
- Tirage des sarments coupés, c'est-à-dire extraction et dégagement de ceux-ci hors des fils de palissage, ces sarments tendant à y rester accrochés par des vrilles, tout en respectant les plants, poteaux et fils ;
- Problème particulier du ménagement des coursons (sarments-porteurs) à leur base, tout en ne compromettant pas l'opération d'extraction des sarments (taille en cordon) ;
- Exhaustivité et qualité de coupe, cette qualité devant être toujours égale.

Il est à souligner que ces buts - à concilier avec celui, plus général, d'une construction rationnelle, donc d'une réduction du coût de la machine - sont à atteindre, quelles que soient les conditions de mise en oeuvre (voir plus haut : type de taille, palissage, etc.).

Les solutions à ces problèmes ainsi que la qualité de ces solutions sont étroitement liées aux concepts de base régissant le fonctionnement de la machine, c'est-à-dire aux modes ou processus adoptés concernant, d'une part, celui de la coupe et, d'autre part, celui de la conformation et de l'actionnement des parties mobiles.

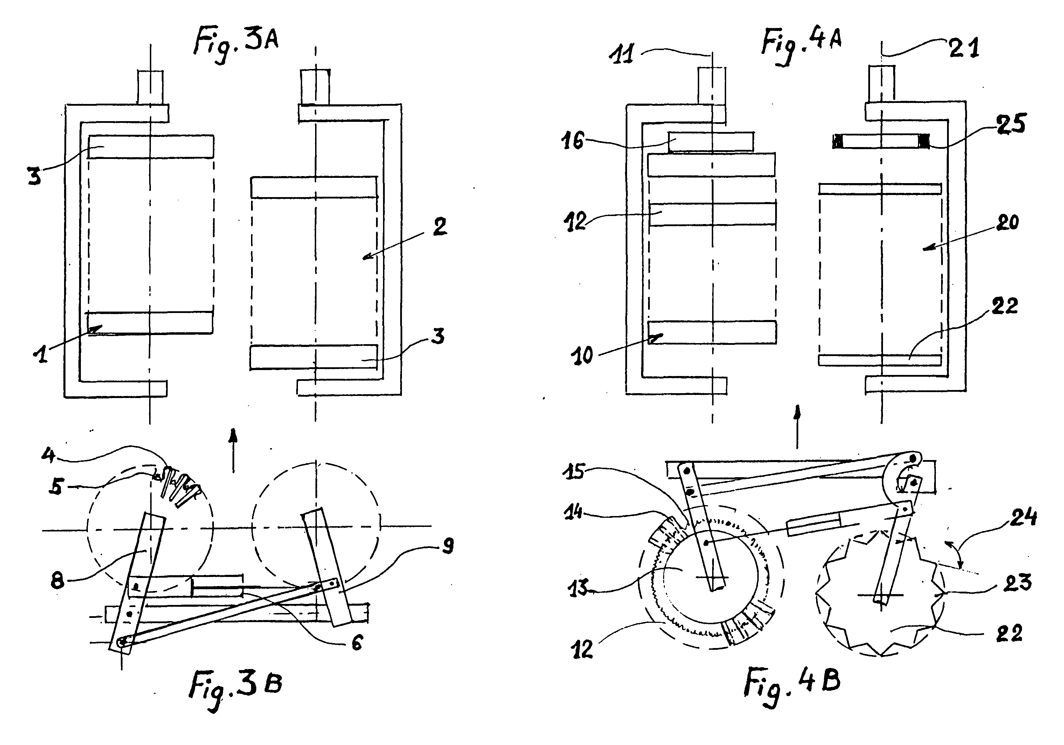

EP-0,147,344 divulgue une machine de coupe du genre défini en introduction (ci-après machine Pellenc, représentée schématiquement aux Fig. 3A et 3B), présentant une tête de coupe avec deux ensembles de coupe 1, 2 identiques comportant chacun un empilage d'outils de coupe 3 travaillant par cisaillement. L'outil de coupe comprend deux éléments. L'élément extérieur 4, appelé cage, est formé d'un disque à denture périphérique et à nervures radiales soudées sur chacune des faces du disque, le nombre de nervures sur chaque face étant égal au nombre de dents, une nervure s'étendant chaque fois de la zone centrale à l'extrémité de la dent correspondante ; il est soumis à un entraînement continu en rotation et remplit la fonction de lame et, théoriquement, une fonction de protection. L'élément intérieur 5 est un disque présentant sur une partie de sa périphérie des dents ; il est fixe, plaqué contre le disque de l'élément extérieur et remplit la fonction de contre-lame. Les outils d'un ensemble peuvent interpénétrer dans des espaces ménagés entre-outils de l'autre ensemble, l'ouverture des ensembles 1, 2 étant actionné au moyen d'un vérin 6 commandé par l'opérateur, les supports 8, 9 se trouvant sous l'action de ressorts de rappel.

Les inconvénients dont cette machine est affectée s'expliquent de la manière suivante premièrement, la coupe par cisaillement exige un couple d'entraînement très élevé, de surcroît appliqué à l'élément extérieur, la cage. Deuxièmement, les fonctions de protection - des poteaux, particulièrement lorsque ceux-ci sont de section réduite, des fils, des tendeurs de fils et de l'élément intérieur - que ladite cage est appelée à remplir, ne peuvent l'être correctement pour une triple raison : d'abord, cette cage intervient directement dans la coupe (lames), alors qu'elle est en contact notamment avec des fils, ensuite, corollaire du point précédent, elle doit nécessairement et forcément être toujours entraînée - on l'a dit plus haut, avec un couple élevé, enfin, elle n'est pas, de par sa conformation, un élément fermé, ni à sa périphérie, ni sur le dessous, ni sur le dessus.

Aussi les résultats fournis par la machine Pellenc ne sont-ils pas satisfaisants. On déplore en premier lieu, de fréquents dommages sur les poteaux et tendeurs de fils, la mise "en accordéon" des fils ou la rupture de ceux-ci, et même la détérioration des outils de coupe lorsque le fil s'y introduit, la fréquence de tous ces désordres augmentant sensiblement lorsque la végétation s'enchevêtre dans le palissage - comme cela est très fréquent - ; en deuxième lieu, l'absence d'extraction ou l'extraction médiocre des sarments coupés hors des fils dans toutes les situations où, sur cette machine, la composante tangentielle de la vitesse de rotation du disque de cage est essentiellement et nécessairement égale à la vitesse d'avancement (taille en cordon par exemple) ; en troisième lieu, du fait du jeu qui s'établit entre les lames et contre-lames, la dégradation de la qualité de coupe ; en quatrième lieu, qu'il n'existe aucune possibilité de ménager les coursons (taille en cordon).

La machine décrite dans DE-40 37 590 ou FR-91 14502 (ci-après machine Binger Seilzug représentée schématiquement aux figures 4A et 4B) part d'un concept tout à fait différent, lequel permet de réduire les inconvénients de la machine Pellenc, mais pas encore de manière satisfaisante.

La machine de coupe Binger Seilzug présente une tête de coupe avec deux unités 10, 20 non identiques avec fonction d'interpénétration. L'une 10 des unités comporte un empilage d'outils de coupe 12, l'autre 20 un empilage d'outils-ameneurs 22 (ci-après ameneurs). L'outil de coupe comprend deux éléments. L'élément extérieur 13 est une cage formée de deux disques reliés à leur périphérie par des arceaux 14 en forme de "U" ; il est soumis à un entraînement libre en rotation et remplit une fonction de protection (poteaux, fils, tendeurs, élément intérieur). L'élément intérieur 15 est une scie circulaire effectuant la coupe ; elle est enveloppée par la cage, indépendante de celle-ci et entraînée en rotation à une vitesse de l'ordre de 1000 t/min.. L'ameneur est formé d'un disque présentant une denture 23 à sa périphérie, les flancs de ces dents étant droits et ouverts à un angle de 90°. L'unité d'ameneurs est soumise à un entraînement continu en rotation. L'ouverture des ensembles 10, 20 est actionnée par un vérin commandé par l'opérateur.

Selon leur degré d'ouverture/fermeture, les unités 10, 20 peuvent coopérer entre elles par l'intermédiaire d'une roue à friction 25 (roue pourvue d'une bande de caoutchouc) et une jante 16, placées respectivement au-dessus de l'ensemble 20 et 10.

Les fonctions protectrices de la cage étant sensiblement mieux assurées, les risques d'endommagement des poteaux, fils, tendeurs de fils sont plus réduits que ceux rencontrés sur la machine Pellenc. Pourtant, les moyens adoptés pour maîtriser le mouvement des cages libres en rotation ne sont pas idéaux et ouvrent le champ à d'autres inconvénients. En effet, on constate que les éléments mécaniques sont soumis à des sollicitations répétées, donc dynamiques, lorsque la machine évolue en conditions quelque peu difficiles. Ces sollicitations proviennent des chocs engendrés à chaque fois que, lors de la fermeture des deux unités (qui est et doit être rapide), la roue 25 arrive brutalement contre la jante 16 (1er groupe de sollicitations), puis la mise en mouvement instantanée de l'unité de coupe 10 (2ème groupe de sollicitations). Lors de l'ouverture, les scies tournant à grande vitesse, le mouvement de rotation des cages se trouve rapidement accéléré sous l'effet des forces de frottement des roulements des scies, puis ces cages sont freinées violemment par un sabot frein (non-représenté sur les Fig. 4A et 4B) (3ème groupe de sollicitations). Outre les ennuis mécaniques que ces sollicitations entraînent (usure rapide, fiabilité médiocre, durée de vie courte), le contrôle du mouvement des cages est fortement compromis en cas de gel ou de pluie, la friction étant alors considérablement diminuée, ce qui provoque l'arrachage des sarments. D'autres inconvénients trouvent leur source, d'une part, dans les ameneurs, la conformation des dents laissant place au glissement d'une partie de la végétation, surtout si elle est dense, et d'autre part, dans les cages, là aussi la conformation étant telle que les risques de dommages sur les poteaux et fils ne sont pas totalement écartés, en dépit du progrès enregistré par rapport à la machine Pellenc.

Enfin, tout comme sur la machine Pellenc, la machine Binger Seilzug ne comporte aucun dispositif pour ménager les coursons.

Le but de la présente invention est d'apporter des solutions efficaces et réelles aux problèmes exposés plus haut et d'écarter ainsi tous inconvénients que présentent les machines de l'art antérieur.

Ce but est atteint grâce aux moyens définis dans la partie caractérisante de la revendication 1, les revendications dépendantes définissant des moyens particuliers permettant de réaliser l'invention à bon compte.

On va décrire à présent en détail, à titre d'exemples des formes d'exécution de la machine de coupe (ci-après la prétailleuse) selon l'invention, à l'appui des dessins annexés où
- la Fig. 5: montre une vue arrière (c'est-à-dire en regardant dans le sens d'avancement) des modules de coupe et des ameneurs en phase d'interpénétration,
- la fig. 6: représente une vue de dessus de la prétailleuse,
- la Fig. 7: est une coupe de la cage selon une ligne VII - VII de la figure 5,
- la Fig. 8: est une demi-coupe de la cage selon une ligne VIII - VIII de la figure 7,
- la Fig. 9: est une vue en plan partielle d'un ameneur,
- la Fig. 10: est une demi-coupe de l'ameneur selon une ligne X - X de la figure 9
- la Fig. 11: est une coupe d'un dispositif destiné à ménager les coursons,
- la Fig. 12: est une coupe de la partie inférieure du module de coupe montrant l'empilage des cages,
- la Fig. 13: est un schéma de branchement des moteurs des scies, ameneurs, outils de coupe et vérin,
- la Fig. 14: est un schéma d'une variante de branchement de la Fig. 13, et
- la Fig. 15: est un schéma explicatif concernant le tirage des sarments,
(étant rappelé que les figures 1 à 4 ont été mentionnées pour situer les domaines d'applications typiques des prétailleuses et commenter les antériorités les plus proches).

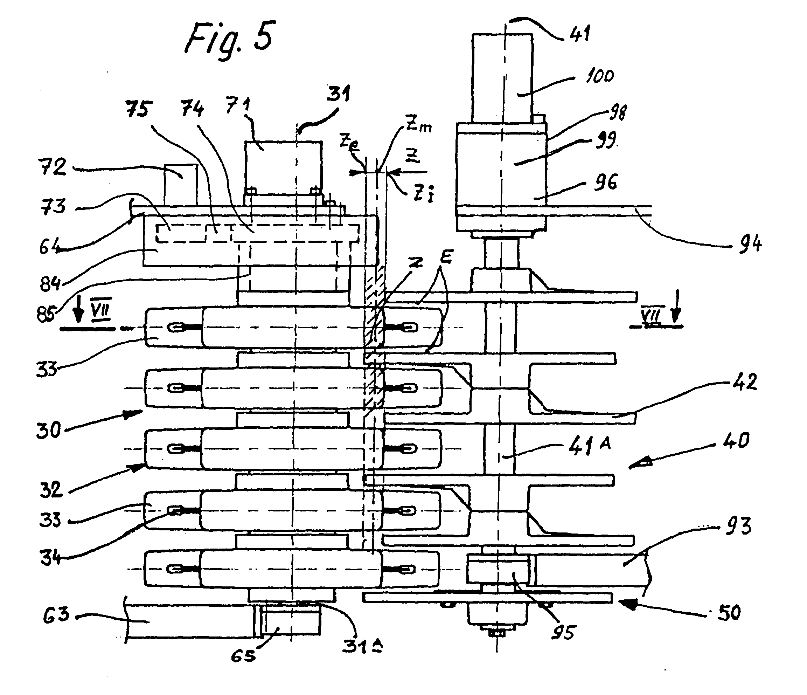

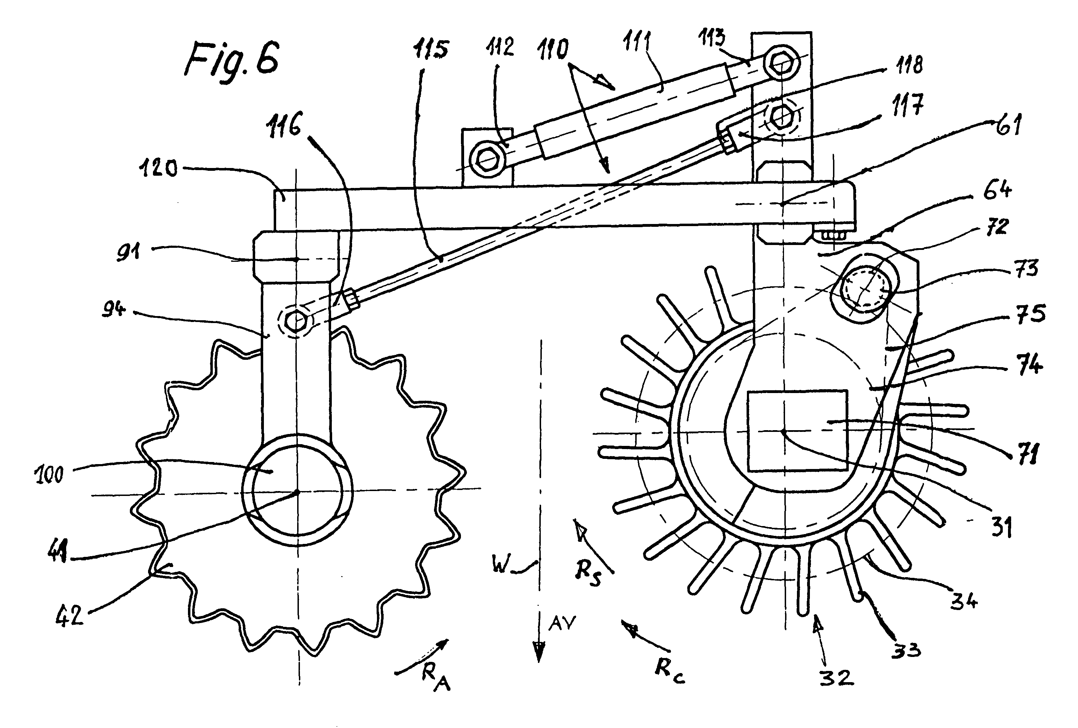

Les figures 5 et 6 permettent de présenter la prétailleuse appelée à être agencée dans la zone avant droite ou latérale droite d'un tracteur non représenté. Le sens d'avancement de la prétailleuse est symbolisé par la flèche AV sur la figure 6, tandis qu'à la figure 5, la prétailleuse est vue de l'arrière, l'observateur étant placé en regardant dans le sens d'avancement. On aperçoit un module de coupe 30 d'axe 31 et un module ameneur 40 d'axe 41. Le module de coupe 30 comprend un empilage d'outils de coupe 32 sur un arbre 31A, chaque outil 32 comportant un élément extérieur, c'est-à-dire une cage 33 et un élément intérieur de coupe, c'est-à-dire une scie 34.

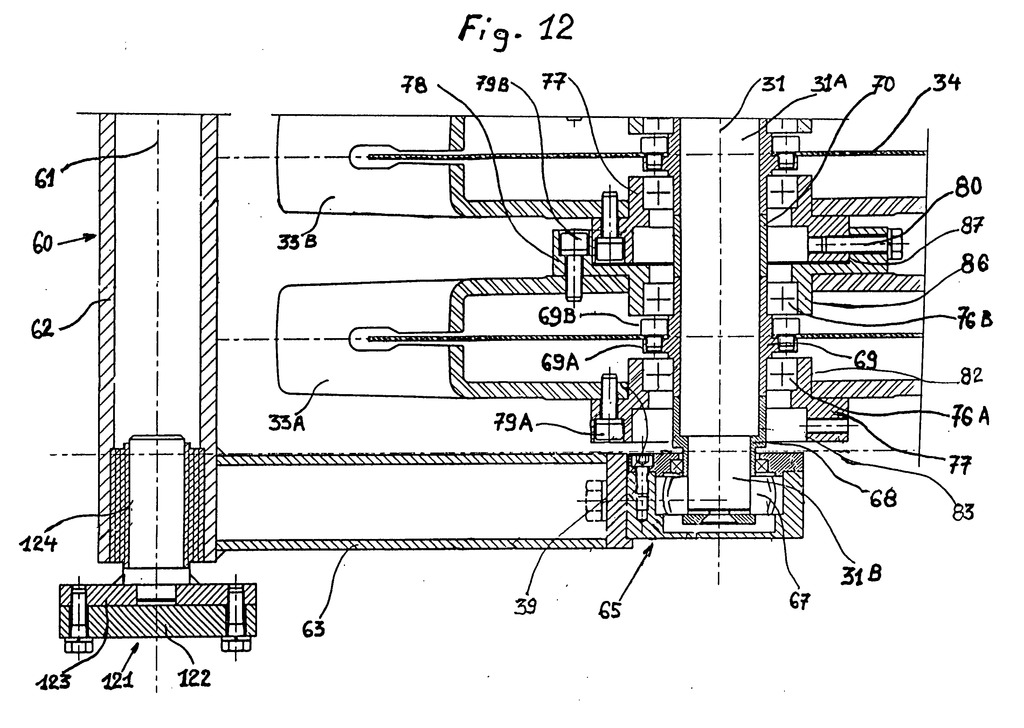

Le module de coupe est porté par un support 60 pivotable autour d'un axe 61 (Fig. 12). Seuls les bras de dessous 63 et de dessus 64 du support 60 sont représentés à la figure 5. (A la fig. 12 un montant 62 reliant ces deux bras est représenté partiellement).

Les cages sont soumises à un entraînement nouveau et original, l'une des composantes essentielles de l'invention, qui sera décrite en détail plus loin : le couple d'entraînement est réglable et adaptable aux conditions de travail (types de taille, état des poteaux et du palissage, nature du terrain, etc.) grâce à un dispositif hydraulique de sécurité, par exemple par glissement. L'entraînement des cages est assuré par un moteur hydraulique 72 entraînant une couronne 74 par l'intermédiaire d'une courroie 75 ; celui des scies est assuré par un moteur 71. Les sens de rotation des cages et des scies sont symbolisés par les flèches Rc et Rs à la figure 6. Les deux moteurs 71, 72, sont fixés sur le bras 64 du support 60.

Le module ameneur ou d'alimentation 40 comprend un empilage d'outils-ameneurs 42 (ou ameneurs 42) sur un arbre 41A, ces outils 42 présentant chacun la forme de disque.

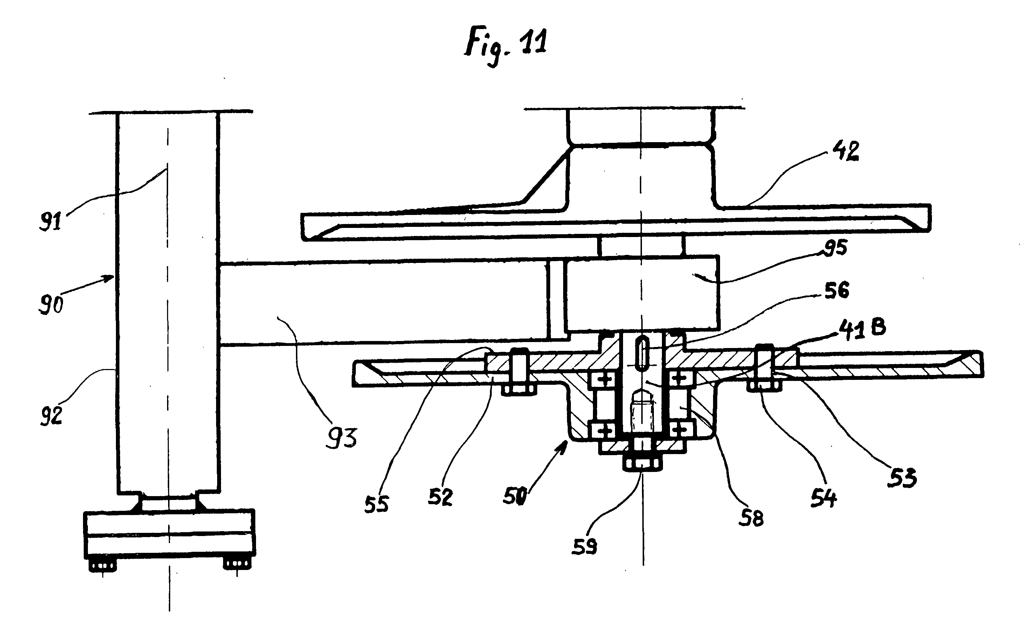

Le module ameneur 40 est porté par un support 90 pivotable autour d'un axe 91. Seuls les bras de dessous 93 et de dessus 94 sont représentés à la figure 5. (A la fig. 11, un montant 92 reliant les deux bras est partiellement représenté).

Les ameneurs 42 sont soumis à un entraînement en rotation soit de type classique, c'est-à-dire continu, soit de préférence de type analogue à celui prévu pour les cages. Selon l'exemple décrit, cet entraînement est assuré par un moteur hydraulique 100 fixé sur le bras 94 du support 90; le sens de rotation est symbolisé par la flèche Ra à la figure 6.

On observe que le module ameneur de base 40, formé par l'empilage des ameneurs entre les deux bras 93, 94, est complété par un dispositif 50 agencé de l'autre côté du bras 93. La description et la signification de ce dispositif seront données à l'appui de la Fig. 11.

Les deux supports 60, 90 sont à leur tour reliés à un châssis en forme de "U" inversé, dont on voit la traverse horizontale supérieure 120 à la figure 6. Les longerons parallèles de ce châssis, qui s'étendent parallèlement, l'un à proximité du montant 62 du support 60, l'autre à proximité du montant 92 du support 90, ne sont pas représentés.

Chacune des parties terminales des longerons parallèles du châssis est pourvue d'un dispositif de pivotement 121 connu en soi (Fig. 12). Il comprend une plaque 122 solidaire du châssis. A celle-ci est fixée une embase 123 pourvue d'un axe pivot 124, de manière à permettre le pivotement précité des supports 60, 90 autour de l'axe 61 et 91 respectivement.

Le pivotement des supports autour des axes 61, 91 permet aux modules, en cours de travail, de s'écarter de l'axe de travail W (Fig. 6) (correspondant essentiellement au rang de vignes dont la végétation est à prétailler/tailler), et de se rapprocher dudit axe W jusqu'à le dépasser, afin que les deux modules puissent interpénétrer l'un dans l'autre, comme représenté à la figure 5.

Les supports 60, 90, sont actionnés au moyen d'un dispositif 110 comportant un vérin double-effet 111 et un tirant 115, de façon à permettre ces mouvements d'ouverture (éloignement des modules par rapport à l'axe W) et de fermeture (rapprochement et, selon les cas, franchissement des modules de l'axe W).

Le vérin 111 est relié par l'une de ses tiges 112 à la traverse 120 du châssis et par l'autre tige 113 au bras supérieur 64 du support 60 du module de coupe 30. A ce même bras 64 est reliée l'une des extrémités 117 du tirant 115, l'autre extrémité 116 du tirant étant reliée au bras supérieur 94 du support 90 du module ameneur 40. On comprend aisément à l'appui de la figure 6 que par exemple la fermeture du module de coupe 30 est provoquée par la poussée vers l'extérieur de la tige du vérin reliée au bras 64, poussée qui engendrera le déplacement vers l'extérieur de la partie 117 et, corrélativement, le rapprochement du module ameneur 40 vers l'axe W.

Chaque extrémité aussi bien du vérin 111 que du tirant 115 comporte une rotule et un dispositif de réglage de la longueur dudit vérin et dudit tirant, les rotules étant filetées sur une longueur. Rotules, filetages et moyens de blocage du réglage ne portent pas de références spécifiques. Ce dispositif connu en soi n'est symbolisé à la figure 6 que par la représentation d'écrous de blocage 118 sur le tirant 115. Ce réglage offre l'avantage de pouvoir adapter le rapprochement ou l'éloignement souhaité des modules de coupe 30 et ameneurs 40 de l'axe W, selon la densité de la végétation.

On observe à la figure 5, que le bord inférieur/supérieur d'un outil d'un module est séparé du bord supérieur/inférieur d'un outil correspondant de l'autre module, d'une distance moyenne référencée E. On commentera plus loin la portée de ce paramètre.

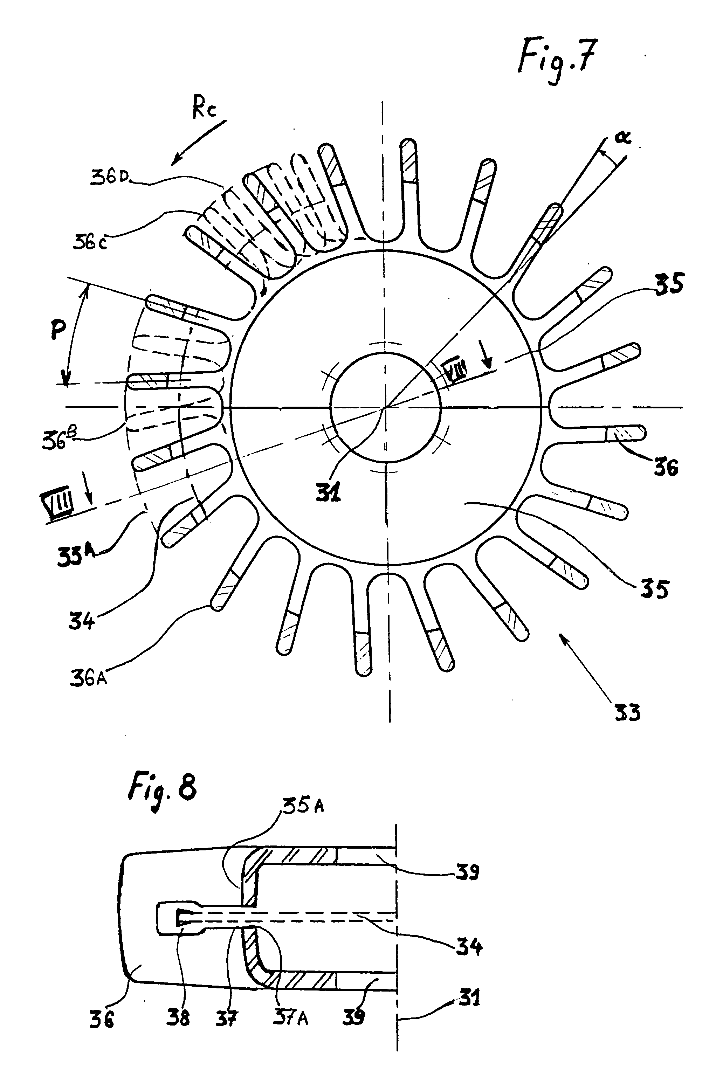

La figure 7 représente en coupe selon la ligne VII - VII de la figure 5 une cage circulaire 33 pourvue sur le dessous et le dessus d'ouvertures centrales 39 et équipant le module de coupe 30, cage dans laquelle est logée la scie 34 symbolisée sur cette figure par son contour en trait mixte. La figure 8 est une demi-coupe selon la ligne VIII - VIII de la figure 7. La cage 33 est formée de deux demi-coquilles 35 dont la ceinture 35A, s'étendant quasi parallèlement à l'axe 31, présente une fente médiane axiale 37A et est prolongée de pales pleines 36. Ces pales peuvent être orientées radialement ou, de préférence, quasi-radialement. Elles sont relativement épaisses et leur extrémité 36A, vue en plan, est arrondie. Elles présentent une fente médiane 37 dans laquelle peut évoluer la scie 34, la zone terminale de ces fentes étant évasée. L'évasement 38 est prévu pour deux raisons : d'abord, laisser place à la voie (léger écartement alterné des dents) de la denture de la scie. Ensuite, pour une raison de sécurité, l'évasement évite tout risque d'endommagement des pales 36 et de la scie 34 elle-même lorsque, par exemple, pour cause de ravinement du sol, la végétation engagée dans la cage, c'est-à-dire entre les pales 36, agit sur la scie, au point que les flancs de celle-ci peuvent même toucher l'une ou l'autre des faces (non-spécifiquement référencées) des fentes 37.

On observe que les pales des cages sont décalées, par rapport à l'orientation radiale, d'un angle α dans le sens de rotation Rc. Cet angle favorise, dans un premier temps, la "prise" de la végétation, laquelle sera aussitôt sectionnée par les scies, puis dans un second temps, l'évacuation des sarments coupés, cela en combinaison avec la particularité concernant la relation entre les vitesses de rotation des cages et des ameneurs (cf. infra).

Les pales d'une cage peuvent être décalées soit d'un demi-pas (le pas porte la référence P à la figure 7) par rapport aux pales des cages suivantes (pales 36B d'une cage adjacente), soit d'un tiers de pas (pales 36C d'une cage adjacente à celle représentée en trait plein et pales 36D d'une cage adjacente à la cage dont les pales sont référencées 36C). On préférera l'une ou l'autre des dispositions selon les sections des poteaux.

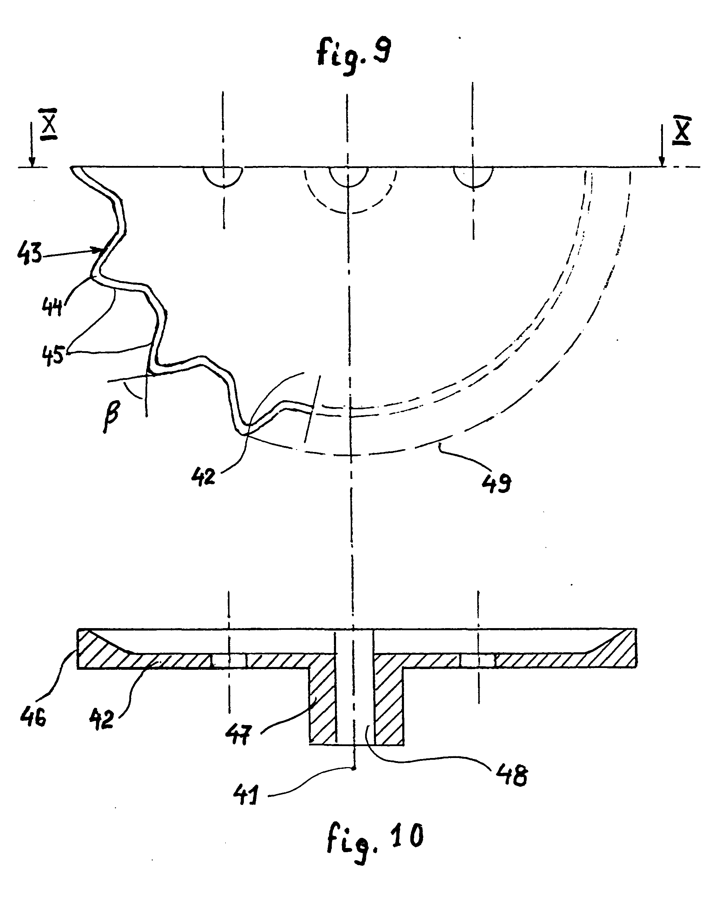

La figure 9 représente une demi-vue en plan de l'outil-ameneur 42 équipant le module 40, la figure 10 étant une demi-coupe selon la ligne X - X de la figure 9.

L'outil ameneur 42 présente la forme d'un disque comportant à la zone centrale un moyeu 47 et un alésage 48, et à la périphérie, une denture périphérique 43 particulière en ce que cette denture présente un profil globalement semblable à celui d'un engrenage. Les flancs 45 des dents sont légèrement courbes, les sommets 44 sont arrondis et l'angle β est inférieur à 90° (avantageusement de l'ordre de 80°). L'épaisseur des dents (référence 46 à la Fig. 10) est relativement importante ; selon l'exemple, elle est d'environ 15 mm. Les bords 46 sont parallèles à l'axe de rotation 41. Ce profil présente l'avantage de combiner une certaine agressivité juste nécessaire et suffisante pour assurer une bonne saisie de la végétation, avec une capacité de "remplissage" suffisamment importante, tout en ne causant aucun dommage aux poteaux, tendeurs et fils, et de contribuer à une bonne évacuation des sarments coupés.

La figure 11 représente le dispositif inférieur 50, autre composante de l'invention, pouvant compléter le module ameneur de base 40 et comprenant un disque 52, analogue au disque 42, mais présente un alésage 58 plus grand que l'alésage 48 du disque 42, et des trous 53. Ce disque remplit une fonction de protection spécifique. Bien entendu, selon des variantes possibles, le disque 52 pourrait présenter un profil différent de celui d'un disque 42. On peut également envisager toute autre forme d'outil en lieu et place d'un disque 52.

Observons auparavant que l'agencement du module ameneur 40 lui-même n'appelle pas d'explications particulières : l'arbre 41A est guidé par deux paliers 95 et 96 fixés en bout des bras 93 et 94 et est lié axialement. Les ameneurs sont empilés sur l'arbre 41A, liés en rotation et axialement avec ce dernier selon des modes connus, les ameneurs étant successivement disposés comme montré à la figure 5. Les ameneurs sont entraînés en rotation par l'action du moteur 100 relié à l'arbre 41A. La transmission de ce mouvement est effectuée selon des modes connus qu'il n'y a pas lieu de décrire en détail (selon l'exemple, par l'intermédiaire d'un accouplement 99 logé dans un manchon protecteur 98 (Fig. 5)).

L'arbre 41A se dégage du palier inférieur 95 d'une portion 41B. Sur ce bout d'arbre 41B est monté un flasque 55, solidaire de cette partie 41B au moyen d'une clavette 56. Le disque 52 est rendu solidaire de ce flasque par des moyens de fixation 54; il est monté sur deux roulements 57. L'ensemble est tenu par des moyens 59. Ainsi, ce disque 52 est soit soumis à l'entraînement de l'arbre 41A lorsqu'il est solidaire du flasque 55, soit libre en rotation lorsqu'il est désolidarisé dudit flasque, les vis 54 ayant été retirées. De plus, il peut être facilement escamoté, c'est-à-dire retiré en le dégageant par le bas après dévissage de la vis 59.

Ce dispositif est particulièrement intéressant lorsque la machine est mise en oeuvre dans les vignes de type cordon. En effet, sa faculté d'être totalement libre en rotation ménage au maximum les coursons en ne les blessant pas, alors que l'opération de tirage des sarments coupés reste assurée grâce à la rotation des disques-ameneurs supérieurs du module 40, lesquels restent soumis à l'entraînement en rotation selon les particularités décrites plus loin.

Selon une variante, au lieu de l'agencement décrit, ou pourrait prévoir qu'au moins un disque-ameneur, analogue au disque 52 ou non, fasse partie du module 40, c'est-à-dire que ce ou ces disques débrayables soient aménagés juste au-dessus du bras 93. Bien sûr, dans ce cas, il(s) ne serait (seraient) pas escamotable(s). On note enfin qu'un dispositif 50 tel que décrit est envisageable sur des prétailleuses dont la tête de coupe n'est composée que de modules ou d'ensembles de coupe.

La figure 12 représente la partie inférieure du module de coupe avec essentiellement un dispositif original de liaison des cages 33 entre elles et l'agencement des scies 34. On considérera, pour l'explication, deux cages 33A et 33B.

Rappelons auparavant que l'entraînement des cages et des scies est assuré respectivement par les moteurs 72 et 71 fixés tous les deux sur le bras 64 du support 60 (Fig. 5 et 6). L' arbre 31A est directement relié au moteur 71 par l'intermédiaire d'un accouplement (non représenté) logé dans un carter 84, selon des variantes de construction connues en soi. Le moteur 72 entraîne les cages 33, avec la particularité que cet entraînement est indirect, la couronne 74 étant entraînée par une poulie 73 disposée sous le moteur 72, par l'intermédiaire de la courroie 75. La cage supérieure est entraînée à son tour par la couronne 74 par l'intermédiaire d'une entretoise 85 solidaire, d'une part, de la couronne 74 et, d'autre part, de ladite cage supérieure. Là aussi, les constructions sont connues de l'homme du métier.

On aperçoit sur la figure 12 I'extrémité inférieure 31B de l'arbre d'entraînement 31A d'axe 31 qui repose dans un palier 65, palier et arbre 31B étant reliés par un roulement 67. Une bague épaulée 68, solidaire de l'arbre 31A, prend appui par sa base inférieure sur la bague intérieure du roulement 67. Sur la base supérieure de cette bague épaulée repose un moyeu porte-scie 69 également solidaire de l'arbre 31A par un moyen de solidarisation connu en soi. Le moyeu 69 présente une embase 69A sur laquelle est posée la scie 34, laquelle est fixée à ce moyeu au moyen de vis 69B. De part et d'autre de cette embase, sont disposés des roulements 76A et 76B (identiques) dont la bague intérieure chaque fois est solidaire du moyeu 69. Chaque moyeu porte-scie est séparé du moyeu 69 suivant par une entretoise 70.

De part et d'autre de la cage 33A sont disposés, du côté inférieur, un palier 77 et, du côté supérieur, un palier 78.

Le palier 77 est étagé ; il présente un épaulement 82 et un évidement 83. Il est engagé par son épaulement 82 dans l'ouverture inférieure 39 de la cage 33A et repose sur la face inférieure, plane à cet endroit, desdites coquilles. Enfin, ce palier 77 est solidaire de la bague extérieure du roulement inférieur 76A (la bague intérieure de ce roulement étant, rappelons-le, solidaire du moyeu porte-scie 69) et fixé à la cage 33A au moyen de vis 79A.

De manière analogue, le palier 78 est étagé ; il présente un épaulement 86 et un évidement 87, le diamètre de cet évidement correspondant au diamètre extérieur du palier 77. Il est engagé par son épaulement 86 dans l'ouverture supérieure 39 (ouverture supérieure et inférieure portant la même référence 39, cf Fig. 8) de la cage 33A et repose sur la face supérieure, plane à cet endroit, desdites coquilles. Enfin, ce palier 78 est solidaire de la bague extérieure du roulement supérieur 76B (la bague intérieure de ce roulement étant, rappelons-le, solidaire du moyeu porte-scie 69) et fixé à la cage 33A au moyen de vis 79B.

Du côté inférieur de la cage 33B est monté à son tour un ensemble palier 77 - roulement 76A répondant à la description faite plus haut. Ce nouveau palier 77 s'emboîte dans l'évidement 87 du palier 78 de la cage 33A et les dits paliers 77, 78 sont rendus solidaires l'un de l'autre au moyen de vis 80.

L'agencement des cages suivantes (c'est-à-dire en allant vers le haut), répond au même schéma.

Cette disposition ingénieuse offre une série d'avantages que l'on saisit aussitôt : construction rationnelle rendant inutiles tous éléments superflus tels qu'entretoises, montage simple et rapide, coûts réduits, parfaite transmission du mouvement de rotation et très grande fiabilité.

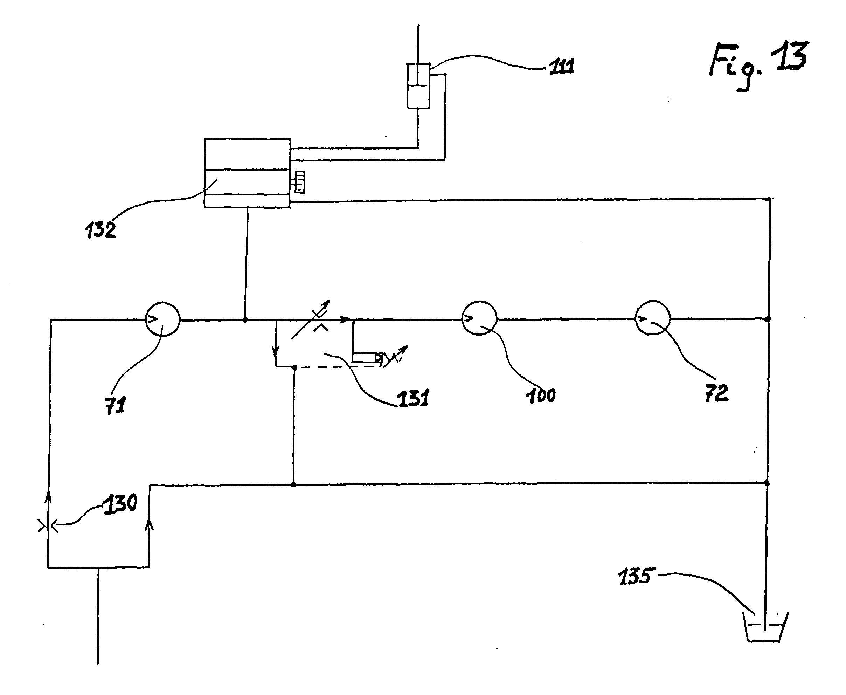

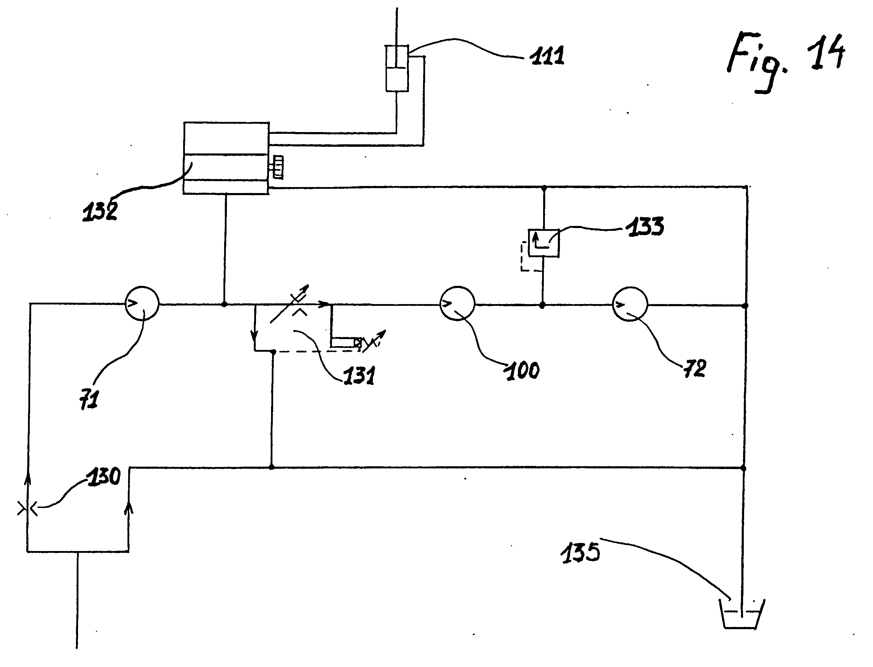

On va à présent expliquer les principes et modes de fonctionnement du module de coupe 30, du module-ameneurs 40 et des supports 60, 90 portant ces modules, en nous reportant aux deux formes d'exécution répondant, l'une au schéma de la figure 13, l'autre à celui de la figure 14.

De manière générale, selon l'invention, au moins les cages du module de coupe, de préférence également les ameneurs 42 du module 40, sont soumis à un entraînement à couple réglable, limité et adaptable aux conditions de travail (notamment densité de végétation, type de taille, vitesse d'avancement), conformément aux deux formes d'exécution des fig. 13 et 14. Pour réaliser ce type d'entraînement, l'homme du métier, une fois que sa réflexion et démarche inventive l'ont conduit à ce concept non évident, peut envisager différentes sortes de dispositifs tels que embrayages hydrauliques à friction, patinage de courroie (entraînement à "glissement"), ou encore embrayage à crabot, etc. Les figures 13 et 14 représentent des exécutions de circuits hydrauliques particulièrement avantageuses.

A la figure 13, les trois moteurs hydrauliques 71 (scies), 100 (ameneurs) et 72 (cages) sont branchés en série. Cette disposition permet de limiter chacun de ces moteurs à des pressions différentes et adaptées. Selon l'exemple, la séquence de cette série correspond à une demande de pression usuelle desdits moteurs dans un ordre essentiellement décroissant.

Les scies, reliées au moteur hydraulique 71, sont soumises à un entraînement en rotation à une vitesse qui restera constante pour un réglage donné, indépendamment de la vitesse d'avancement V_{A} de la prétailleuse, de sorte que lesdites scies vont, comme il se doit, effectuer toujours le même travail. A titre indicatif, une vitesse de rotation élevée, de l'ordre de 1500 t/min., permet d'obtenir des coupes de grande qualité, cela quelles que soient les sections des sarments à couper (sections qui peuvent dépasser, selon les régions ou pays, 15 mm. de diamètre). Selon les variantes, le moteur 71 est relié à un régulateur de débit variable que le conducteur pourra manoeuvrer ou à un régulateur de débit fixe 130, le conducteur étant alors libéré de toute manoeuvre. On sait que la pression usuelle de travail du moteur des scies est de l'ordre de 50 à 60 bars

En amont du moteur des ameneurs 100 est agencé un régulateur de débit avec limiteur de pression 131. Celui-ci permet de régler la pression totale admissible, c'est-à-dire le couple sur le moteurs des ameneurs et sur celui des cages, la somme admissible des pressions Pa et Pc sur lesdits ameneurs et lesdites cages respectivement, pouvant être choisie à l'intérieur d'une plage tarée (pour assurer un travail de qualité et sûr, donc sans dommages) s'étendant par exemple de 50 à 100 bars. Sur la prétailleuse selon l'invention, la pression usuelle de travail sur le moteur 100 est de l'ordre de 50 à 60 bars, sur le moteur 72 de l'ordre de 20 à 35 bars.

Le couple exercé sur les cages est moins élevé que celui exercé sur les ameneurs, essentiellement pour deux raisons.

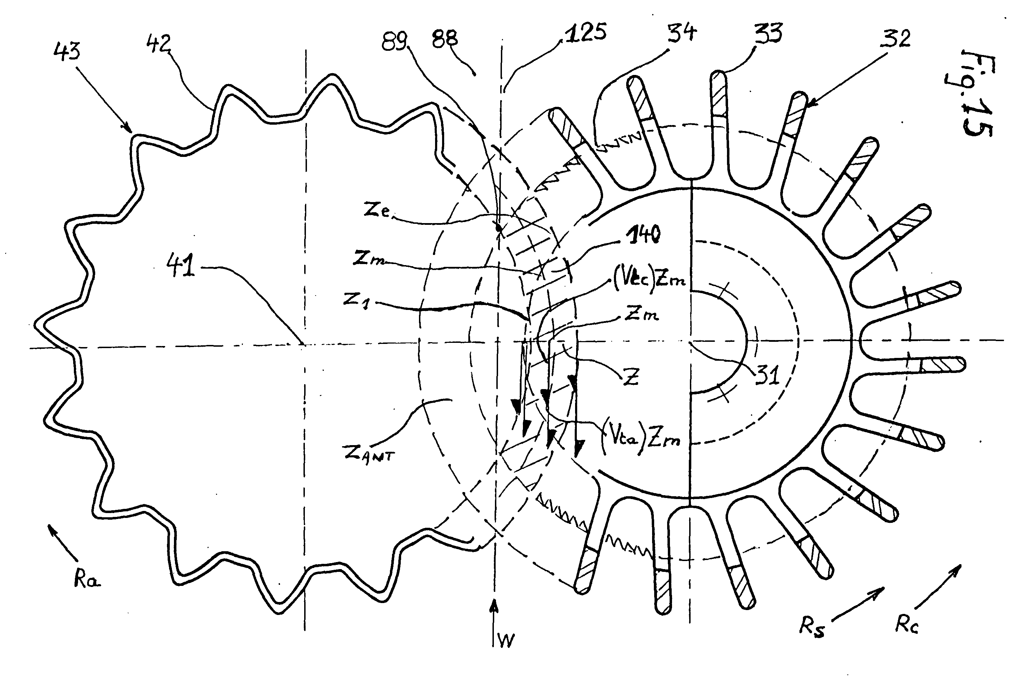

D'abord, les sarments, situés de part et d'autre du fil 125 (voir Fig. 15) dans une zone référencée 88 pour les besoins de l'explication, mais bien entendu, non délimitable avec précision, sont aussitôt sectionnés dès qu'ils entrent en contact avec les scies 34, de sorte que l'énergie nécessaire déployée par les cages 33 pour véhiculer ces sarments est minime, tandis que les ameneurs doivent saisir la végétation pour la conduire vers les outils de coupe 32 (cages 33 et scies 34), ce qui exige une énergie plus importante.

Ensuite, comme on le verra plus loin, la vitesse de rotation des ameneurs est supérieure à celle des cages. Aussi, ces dernières vont-elles bénéficier d'un couple additionnel dû à la friction, fourni par les ameneurs et transmis auxdites cages par l'intermédiaire de la végétation.

Ainsi s'explique aussi la séquence préférée du branchement des deux moteurs 100 et 72 par rapport au moteur 71.

A la sortie du moteur des scies 71 sont branchés, en dérivation, le vérin 111 et un bloc réduction de pression réglable 132 commandant l'ouverture/fermeture dudit vérin. Le bloc réduction 132 est muni d'un limiteur de pression réglable, de sorte que la pression Pv sur le vérin peut être choisie dans une plage tarée (pour assurer la sécurité) pouvant aller jusqu'à une pression maximum Pvₘₐₓ (tarage allant par exemple de 12 à 100 bars). La valeur Pv choisie sera fonction des conditions dans lesquelles va évoluer la prétailleuse, notamment de la densité de végétation/type de taille.

L'agencement selon la figure 13 permet un contournement des poteaux avec un très grande sécurité, c'est-à-dire sans que des dommages auxdits poteaux soient à craindre. Ce contournement se fera soit automatiquement, soit sur commande.

En premier lieu, si, par exemple, le conducteur règle le régulateur 131 sur 60 bars et que le moteur 100 (ameneurs) "absorbe" 40 bars, tandis que le moteur 72 (cages) exige 20 bars, on est à la limite de la pression réglée (Pa + Pc = 60 bars), cages et ameneurs continueront à être entraînés. Supposons maintenant que le conducteur ait réglé le régulateur 131 sur 70 bars, que le moteur 100 "absorbe" 40 bars (Pa = 40 bars) et que les cages, évoluant jusque-là sous une pression de 20 bars, demandent brusquement, pour que le moteur 72 poursuive leur entraînement, une pression plus élevée, par exemple une demande de 35 bars à raison d'une rencontre avec un poteau. Cette demande va être satisfaite à hauteur de 30 bars seulement (Pc = 30 bars), la limite de la pression admissible de 70 bars étant ainsi atteinte ; le clapet (non référencé) du régulateur 131 va s'ouvrir, cela aussi longtemps que la "demande" dépassera 30 bars (en supposant que les ameneurs continuent de travailler sous 40 bars), et l'huile sera évacuée dans le réservoir 135. On dit qu'un moteur "glisse", on parle également "d'entraînement à glissement", et tout se passe comme si le module des cages - plus précisément les cages uniquement de ce module - et le module des ameneurs, qui vont rouler sur la végétation en épousant et adoptant la vitesse d'avancement V_{A} de la prétailleuse, étaient libres en rotation. En l'absence de limiteur de couple, on aurait au contraire assisté à une éventuelle destruction du poteau à cause du couple d'entraînement trop élevé du moteur des cages, puisque la demande de 35 bars aurait été satisfaite. On comprend que le choix de la valeur limite du couple précité à ne pas dépasser sera arrêté par l'opérateur en fonction des conditions en face desquelles il est placé (par exemple selon le type de taille, l'état des poteaux, l'état du palissage etc.). Observons que pendant le laps de temps au cours duquel les moteurs "glissent", l'opération de coupe n'est pas, elle, interrompue, bien au contraire. A moins que le conducteur ne la stoppe volontairement en manoeuvrant le moyen 130, elle se poursuit, le régime d'entraînement des moteurs des scies étant différent et indépendant de celui des cages et ameneurs.

En second lieu, quant au contournement, toujours à titre d'illustration, dans l'hypothèse de travail en type guyot (végétation faible à moyenne/sarments souples), la valeur Pv d'utilisation est relativement faible, de même que Pa, Pc, de l'ordre respectivement 30 bars, 35 bars, 15 bars). Au passage, c'est-à-dire à la rencontre d'un poteau, opposant par définition une résistance plus grande que la végétation, le contact des modules ameneurs/cages contre ledit poteau entraînera une augmentation de la pression sur le circuit du vérin 111. Or, I'opérateur aura pris soin de régler ou d'afficher cette pression Pv au moyen du bloc 132 de telle sorte que celle-ci reste toujours inférieure ou au plus égale à la poussée exercée sur lesdits modules. Grâce à cette adaptation et cet équilibre, les modules vont pouvoir contourner tout obstacle (ouverture) en particulier le poteau en roulant sur lui sans le blesser, Cela automatiquement, c'est-à-dire sans que l'opérateur soit dans l'obligation d'actionner manuellement le bloc 132.

En revanche, en type cordon de Royat (végétation dense/sarments rigides, hauteur de coupe importante), les valeurs d'utilisation Pv ainsi que Pa, Pc, sont très élevées, en tous les cas sensiblement plus importantes qu'en type de taille guyot (de l'ordre respectivement 60 bars, 60 bars, 35 bars). Au passage du poteau, le conducteur devra, là, actionner lui-même la commande électrique (bloc 132) d'ouverture/fermeture. Toutefois, les risques d'endommagement du poteau sont quasi-nulles, même dans l'hypothèse où le conducteur, par exemple à cause d'un détournement d'attention, aurait omis d'actionner à temps la commande 132 du vérin 111, cela grâce au réglage adapté et séparé de Pv d'une part, de Pa et Pc d'autre part, que permet l'agencement selon la figure 13.

L'agencement selon la figure 14 est analogue à celui de la figure 13, à la différence cependant qu'un limiteur de pression 133 est disposé en amont du moteur des cages 72 Ainsi les trois circuits, celui du vérin, des ameneurs et des cages sont pourvus d'une sécurité autonome, en ce sens que la pression Pc est réglable , à l'intérieur d'une plage tarée s'étendant par exemple de 5 à 40 bars, indépendamment non seulement de Pv mais aussi de Pa. L'adoption de cette forme d'agencement est particulièrement intéressante pour les prétailleuses appelées à évoluer en type de taille cordon, celles-ci étant équipées alors de modules comportant un grand nombre d'outils empilés (une dizaine par module par exemple). L'agencement selon la figure 14 permet d'écarter totalement les risques résiduels, Pv, Pa et Pc pouvant être réglés de façon autonome. Il assure de ce fait une protection des cages et du poteau à toute épreuve. Une poussée même faible exercée sur une cage par un quelconque obstacle, aura pour effet de faire rouler cette cage, donc le module, la pression Pc ayant pu être réglée à une valeur relativement faible, inférieure ou au plus égale à Pa.

A titre d'exemple, en admettant que le limiteur 131 soit réglé à 75 bars et que le limiteur 133 le soit à 35 bars, si la pression sur le moteur 100 (ameneurs) est de 40 bars et que la pression "appelée" par le moteur 72 soit de 40 bars également, le clapet du limiteur 133 s'ouvrira, de sorte que Pc reste au plus égale à 35 bars, tandis que le clapet (non référencé) du limiteur 131 restera fermé : seul le moteur 72 "glisse", ce qui augmente considérablement la sécurité de travail. Les contraintes sur les poteaux, tendeurs, fils, exercées par les cages étant, d'habitude, sensiblement plus importantes que celles provoquées par les ameneurs, on comprend que le fait de pouvoir limiter le couple du moteur des cages de façon autonome, comme le permet le branchement selon la figure 14, constitue un avantage considérable.

Selon une autre forme d'exécution (non représentée par une figure), les moteurs 100 et 72 pourraient être branchés en parallèle, en aval du moteur 71. Entre la sortie du moteur 71 et la dérivation des moteurs 100 et 72 serait agencé le dispositif 131 ou un dispositif analogue, puis, au point de dérivation, un diviseur de débit alimentant séparément lesdits moteurs 100 et 72. En amont de chacun de ces derniers, on peut prévoir un limiteur de pression spécifique, de manière à limiter de façon autonome le couple sur chacun de ces moteurs. Cette forme d'exécution nécessite toutefois un élément supplémentaire (diviseur de débit au point de dérivation) et une quantité d'huile double. On lui préférera donc le branchement en série explicité plus haut.

Ainsi qu'on l'a dit en introduction, la tête de coupe peut être composée, selon une variante d'exécution, de deux modules de coupe 30 identiques ou quasi-identiques (on maintiendra toutefois ici, aux fins de simplicité, les mêmes références pour le deuxième module de coupe et pour les éléments y relatifs). C'est dire qu'au moins les cages 33 d'un module de coupe 30 reliées à un moteur 72, de préférence également les cages 33 de l'autre module de coupe 30 reliées à un autre moteur 72 sont soumis à un entraînement glissant, donc non continu, plus précisément à un entraînement à couple réglable, limité et adaptable Dans ce cas, les branchements des moteurs et les tarages se feront de façon analogue à ceux venant d'être décrits en détail, ce que l'homme du métier fera aisément au vu des explications fournies plus haut. Ainsi, on aura la séquence suivante (série) : réservoir, limiteur 130, moteur 71 des organes de coupe 34 du premier module de coupe 30, moteur 71 des organes de coupe 34 du second module 30, limiteur 131, moteur 72 des cages du premier module 30, limiteur 133, moteur 72 des cages du second module 30. La variante de branchement parallèle des moteurs 72 par rapport aux moteurs 71 et dispositifs 130, 131, 133, selon cette variante d'exécution, se déduit aisément par analogie à partir des explications à l'appui de la forme d'exécution décrite en détail. Aussi les schémas de branchement selon cette variante à deux modules de coupe 30 ne sont-ils pas représentés graphiquement.

Si le dispositif portant sur l'entraînement glissant permet d'éviter tout dommage aux poteaux, tendeurs, fils de palissage et aux outils mêmes, le problème du nettoyage des fils, c'est-à-dire celui consistant à tirer et évacuer hors des fils supérieurs le grand nombre de sarments coupés mais restant fortement ancrés auxdits fils par des vrilles, demeure encore.

Selon l'invention, ce problème est résolu, à titre principal, par un choix particulier des vitesses des cages et des ameneurs et, à titre plus subsidiaire ou complémentaire, par la définition d'un paramètre mettant en relation l'espace E (cf. Fig. 5) en phase d'interpénétration.

On se reportera plus particulièrement, pour les explications qui vont suivre, à la figure 15.

Quant à la solution principale, il s'agit de concilier deux conditions.

La première, condition-cadre connue et appliquée sur toute les machines de coupe du domaine considéré, notamment du genre prétailleuse, porte sur la composante tangentielle de la vitesse de rotation des outils de chaque module (cages et ameneurs). Cette composante doit être, à la périphérie ou du moins dans la zone périphérique, égale à la vitesse d'avancement V_{A} de la prétailleuse. Si (Vt_{c})ₚ est la composante tangentielle de la vitesse de rotation des cages à leur périphérie (extrémités ou zones proches des extrémités des pales 36, cf Fig. 7 et 8) et si (Vtₐ)ₚ est la composante tangentielle de la vitesse de rotation des ameneurs à leur périphérie 49 (ou dans la zone proche, cf. Fig. 9), cette condition cadre se traduit par l'égalité au moins approximative (Vt_{c})ₚ ≅(Vtₐ)ₚ ≅ V_{A}.

Cette relation contribue à une bonne alimentation de l'outil de coupe 32 (but également visé avec la conformation de l'ameneur de l'outil de coupe 42), au respect des poteaux (but obtenu en premier lieu grâce au couple réglable expliqué plus haut), et à éviter l'arrachage des sarments, ainsi qu'à préserver ceux non-destinés à être coupés.

La seconde condition est celle que l'inventeur a enregistrée après de nombreuses expériences et observations.

Notons liminairement qu'aux points ou endroits 89, points d'intersection des scies 34, de la base des dents 43 des ameneurs 42 et du fil 125 (ce dernier confondu approximativement avec l'axe de travail W), les sarments sont tous sectionnés (bien entendu, on aperçoit à la figure 15, qui est une vue de dessus, qu'un seul point ou une seule zone 89). Il s'agit donc, à partir de cet endroit de dégager ou tirer hors des fils (essentiellement le fil supérieur ou les deux ou trois fils supérieurs) tous ceux des sarments qui y restent accrochés par leurs vrilles.

Pour que soit effectuée cette opération de tirage, il est primordial que règne, au moins une zone 140 - cf. aussi espace Z de la figure 5 - non pas une égalité entre les vitesses tangentielles respectives définies ci-dessous, mais au contraire une inégalité. Sur les figures 5 et 15, la zone Z est symbolisée par une représentation hachurée, étant entendu que les enveloppes ou limites extérieures Zₑ et intérieures Zᵢ de cet espace ou de la zone 140, sont très grossières (la profondeur de l'espace Z étant délimitée très approximativement par la longueur des dents des ameneurs 42). Remarquons que sur les machines connues, le tirage des sarments s'effectue de part et d'autre du fil supérieur 125, c'est-à-dire alternativement aussi bien dans la zone Z que dans la zone Z_{ANT} (voir figure 15) symétrique à la zone Z par rapport au fil 125. Selon l'invention, I'opération de tirage des sarments est localisée essentiellement en Z, pour la raison qui sera donnée plus loin.

Par souci de simplification, l'examen sera limité à cet espace Z, ou plus précisément Zₘ , c'est-à-dire à l'enveloppe médiane entre Zₑ et Zᵢ (ou espace directement voisinant de cette enveloppe Zₘ).

Si (Vt_{c})_{Zm} est la composante tangentielle en Zm de la vitesse de rotation des cages et (Vtₐ)_{Zm} la composante tangentielle en Zm de la vitesse de rotation des ameneurs, ladite condition d'inégalité se traduit par (Vtₐ)_{Zm} > (Vt_{c})_{Zm} (plus généralement (Vtₐ)_{Z} > (Vt_{c})_{Z} ou (Vtₐ)₁₄₀ > (Vt_{c})₁₄₀ ).

C'est-à-dire que cette inégalité doit être observée en tous points au moins de la zone ou espace Z, respectivement 140 (cf Fig. 15 et 5).

Pour obtenir l'inégalité ci-dessus, tout en respectant l'égalité selon la condition cadre, on peut jouer sur les vitesses de rotation ou vitesses angulaires des cages (Vr_{c}) et des ameneurs (Vrₐ ), ou/et sur la géométrie de ces organes, plus précisément sur le diamètre de chacun d'eux.

Les circuits aussi bien selon la figure 13 que 14 permettent, grâce au régulateur-limiteur 131, de régler et/ou varier Vr_{c} et Vrₐ. La sortie du moteur 100 alimentant le moteur 72 des cages, le rapport de ces vitesses angulaires sera constant (même débit d'huile) soit Vr_{c} / Vrₐ = Δ.

Selon l'exemple décrit, ce rapport est inférieur à 1, tandis que le diamètre extérieur d'un ameneur est inférieur au diamètre d'une cage, de sorte que l'on ait toujours, dans la zone Z, (Vt_{c}/Vtₐ)_{Z} ou (Vtₐ-Vt_{c} / Vtₐ )_{z} constant (le diamètre extérieur d'un ameneur étant égal, selon l'exemple, à 90% environ de celui d'une cage).

A titre d'illustration, selon l'invention, le rapport (Vtₐ - Vt_{c} / Vtₐ )_{Zm}, inférieur à 1, c'est-à-dire en Zm, est d'environ 0,35. Il est de l'ordre de 0,25 en Zi et de l'ordre de 0,50 en Ze.

En adoptant la forme d'exécution à deux modules de coupe 30 identiques ou quasi-identiques l'un à l'autre (sans que l'on fasse état, ici, de références différentes), on aurait alors en lieu et place de Vrₐ ou Vtₐ les vitesses Vr_{c}' ou Vt_{c}' respectivement. Dans cette forme d'exécution, les valeurs des rapports (Vt_{c} ou Vt_{c}')_{Z} ou (Vt_{c}' - Vt_{c} / Vt_{c}')_{Z} seront plutôt plus grands, c'est-à-dire que le rapport Vt_{c} / Vt_{c}' (inférieur à 1) s'éloignera moins de 1 en comparaison avec la forme d'exécution avec module de coupe 30 / module-ameneur 40, puisque l'on tendra à utiliser sur chacun des modules de coupe les mêmes outils, c'est-à-dire les mêmes cages, de même diamètre, même si la possibilité de choix des cages de diamètre différent selon le module de coupe existe.

Quant à la solution subsidiaire (en ce sens qu'elle peut être considérée et adoptée en tant que telle, donc isolément, sans pourtant être, à elle seule, idéale), ou complémentaire (en ce sens qu'elle peut contribuer à la qualité du résultat (en l'améliorant) atteint par les moyens que l'on vient d'exposer à propos des vitesses relatives cages/ameneurs, donc de l'opération de tirage des sarments hors des fils), elle revient à considérer la grandeur du paramètre E évoqué à l'appui des explications de la Fig. 5 (distance entre la face inférieure/supérieure d'un outil d'un module et la face supérieure/inférieure d'un outil correspondant de l'autre module en phase d'interpénétration). Ce paramètre ne doit pas être choisi de façon plus ou moins arbitraire.

Dans les machines de coupe de l'art antérieur, les sarments coupés sont, du fait de l'interpénétration, poussés, c'est-à-dire véhiculés en direction de l'axe de l'un et de l'autre module alternativement, cela parce que le paramètre E est trop important.

Sur les machines connues commentées en introduction, le paramètre E est de l'ordre de 16 mm. (EP. 0, 147, 344) ou de 12 mm. (FR 91.14502). On comprend aisément - cela d'autant plus lorsque, comme sur ces antériorités, les composantes tangentielles des vitesses de rotation des outils dans la zone d'évacuation sont pratiquement identiques, que seule une très faible partie des sarments coupés sera effectivement extraite des fils. Quant à la contribution de l'interpénétration au tirage des sarments, elle est d'autant plus faible et aléatoire que E est grand.
C'est pourquoi, selon l'invention, la machine de coupe, qu'elle comporte une tête de coupe avec deux modules de coupe identiques ou quasi-identiques équipés chacun d'outils de coupe (cages abritant, chacune, un organe de coupe), ou une tête de coupe présentant, comme celle décrite ici à titre d'exemple, un module de coupe et un module d'outils-ameneurs, se caractérise par le fait qu'en phase d'interpénétration, l' écart E entre la face supérieure/inférieure de la cage d'un module et une face inférieure/supérieure de la cage ou de l'ameneur correspondant(e) de l'autre module est inférieur à 16 mm.

Plus avantageusement, la machine de coupe selon l'invention est caractérisée en ce que l'écart E existant en phase d'interpénétration entre la face supérieure/inférieure d'une cage déterminée du module de coupe et la face inférieure/supérieure d'une cage ou d'un ameneur correspondant sera choisi en tout cas inférieur à 12 mm. et, de préférence, de l'ordre de 7 à 9 mm.

De fait, les expériences ont montré que la valeur optimale E se situe autour de 8 mm.. En fixant E à cette valeur, et compte tenu de l'épaisseur des dents des ameneurs 42 (référence 46 sur la Fig. 10) les sarments coupés et "vrillés" vont évoluer principalement dans la zone 140, donc du côté de l'axe 31 exclusivement (et non 41) (Fig. 15). Ainsi, les quelques sarments qui, en dépit de la solution principale venant d'être décrite et concernant les vitesses tangentielles, resteraient éventuellement accrochés aux fils, seront dégagés grâce à cette action complémentaire.

Aussi, le problème de nettoyage des fils est-il véritablement résolu, cela avec une grande perfection.

On comprend à l'appui de l'illustration plus haut que les avantages de ces modes d'entraînement et d'actionnement des modules et du vérin sont considérables. Lorsque les couples préalablement réglés grâce à une sélection adéquate des pressions Pa, Pc en fonction des conditions de travail sont atteints, soit en raison de la présence de poteaux, de tendeurs, d'enchevêtrement de la végétation dans le palissage, ou de tout autre obstacle, et la prétailleuse continuant d'avancer, en d'autres termes lorsque ces couples sont, de par ces faits, neutralisés, cages et ameneurs se dégagent aisément desdits obstacles en roulant dessus, grâce au "glissement" des entraînements : tout endommagement, aussi bien, en particulier, du poteau, que des outils équipant les modules est écarté avec le maximum de sécurité.

On comprend également que ces phases se déroulent "en douceur" à un double titre. D'une part, la prétailleuse ne subit aucun choc brutal, ce qui constitue un garant de la fiabilité et de la longévité de celle-ci quelles que soient l'intensité et les conditions d'utilisation. D'autre part, poteaux et palissage ne sont pas, comme dans le cas de EP-0,147,344, en contact avec des lames ou contre-lames exerçant la coupe, de surcroît soumises à un entraînement continuellement forcé.

Pv, valeur de la pression admissible sur le vérin, est également choisie et réglée en fonction de la densité de végétation ; là aussi les supports des modules s'ouvrent lorsque la poussée exercée sur eux dépasse ladite valeur.

Du fait de l'instauration d'une inégalité des vitesses tangentielles Vtₐ et Vt_{c} entre cages et ameneurs dans une zone Z lors de l'interpénétration, le rapport Vtₐ / Vt_{c} étant toujours constant, le tirage des sarments coupés hors des fils est parfaitement assuré, cela tout en préservant les coursons lorsque la machine est mise en oeuvre dans les vignes présentant une taille en cordon grâce au dispositif 50. Est également assurée une coupe de qualité, toujours égale, cela quelles que soient les conditions d'utilisation de la machine selon l'invention, en particulier lorsque la vitesse d'avancement est lente, en raison par exemple d'un relief du sol accidenté, la vitesse de rotation des scies effectuant la coupe restant constante et indépendante de cette vitesse d'avancement.

Enfin, la conception fonctionnelle originale (couple sur les outils adaptables aux conditions de travail, rapport constant des vitesses angulaires et tangentielles entre cages et ameneurs) est prolongée par une conception non moins ingénieuse quant à la construction, laquelle permet un montage rapide et une très grande fiabilité.

## Revendications

1. Machine de coupe utilisable notamment pour la taille ou prétaille de vignes palissées et comprenant au moins une tête de coupe présentant chacune deux modules, l'un étant un module de coupe (30) comportant une pluralité d'outils de coupe (32) superposés et disposés autour d'un arbre (31A) d'axe (31), l'autre module étant, soit un autre module de coupe (30) comportant une pluralité d'outils de coupe superposés, soit un module-ameneur (40) comportant une pluralité d'outils-ameneurs (42) superposés et disposés autour d'un arbre (41A) d'axe (41), chaque empilage d'outils d'un module étant agencé dans un support pivotable autour d'un axe parallèle à l'axe du module, chaque outil de coupe comportant un élément extérieur en forme de cage ayant une aptitude à un mouvement de rotation et un élément intérieur logé dans ladite cage, cet élément intérieur étant formé d'un organe de coupe (34) indépendant et entraîné en rotation par un moteur (71), chaque outil-ameneur présentant la forme d'un disque à denture périphérique et ayant une aptitude à un mouvement de rotation, les cages, d'une part, et les outils-ameneurs, d'autre part, étant solidaires entre elles/eux, et les outils d'un module pouvant interpénétrer dans des espaces correspondants ménagés entre les outils de l'autre module grâce à l'action d'au moins un vérin ou moyens équivalents, **caractérisée en ce qu'**au moins les cages (33) du module de coupe (30) ou de l'un des deux modules de coupe sont soumises à un entraînement à couple limité, réglable et adaptable.

2. Machine de coupe selon la revendication 1, **caractérisée en ce que** les outils-ameneurs (42) du module-ameneur (40) ou les cages (33) de l'autre module de coupe (30) sont également soumis à un entraînement à couple limité, réglable et adaptable.

3. Machine de coupe selon la revendication 2, **caractérisée en ce que**, soit le moteur (72) des cages (33) du module de coupe (30) et le moteur (100) des ameneurs (42) du module-ameneur (40), soit les moteurs (72) des cages (33) des deux modules de coupe (30) sont reliés à un dispositif de sécurité réglable (131).

4. Machine de coupe selon l'une des revendications 1 à 3, **caractérisée en ce que** le couple exercé sur les cages (33) d'un module de coupe (30), d'une part, est inférieur à celui exercé, soit sur les ameneurs (42) du module (40), soit sur les cages (33) de l'autre module de coupe (30), d'autre part.

5. Machine de coupe selon la revendication 3 ou 4, **caractérisée en ce que** le dispositif de sécurité réglable (131) est un régulateur de débit avec limiteur de pression permettant d'afficher une limite de pression admissible à l'intérieur d'une plage tarée s'étendant de préférence de 50 à 100 bars.

6. Machine de coupe selon l'une des revendications 1 à 5, **caractérisée en ce que** le moteur (72) des cages d'un module (30) est relié à un dispositif de réglage (133) limitant et réglant spécifiquement le couple dudit moteur (72), ce dispositif permettant d'afficher une limite de pression admissible à l'intérieur d'une plage tarée s'étendant de préférence de 5 à 40 bars.

7. Machine de coupe selon l'une des revendications 1 à 6, **caractérisée en ce que** l'entraînement des cages (33) d'un module de coupe (30), des ameneurs (42) ou des cages (33) de l'autre module de coupe (30) et des organes de coupe (34) du ou des modules de coupe (30) sont indépendants les uns des autres.

8. Machine de coupe selon l'une des revendications 1 à 7, **caractérisée en ce que** les organes de coupe (34) d'un module de coupe (30), logés dans les cages (33), sont entraînés en rotation par un moteur (71) et que cet entraînement est indépendant de la vitesse d'avancement de la machine.

9. Machine de coupe selon la revendication 8, **caractérisée en ce que**, soit le moteur (71) des organes de coupe (34) d'un module de coupe (30), le moteur (100) des ameneurs du module-ameneur (40) et le moteur (72) des cages dudit module de coupe sont branchés en série, soit les moteurs (71) des organes de coupe (34) et les moteurs (72) des cages des deux modules de coupe (30) sont branchés en série.

10. Machine de coupe selon la revendication 8, **caractérisée en ce que**, soit les moteurs (100) du module (40) et (72) du module (30) sont branchés en parallèle à la sortie du moteur (71), soit les moteurs (72) des modules (30) sont branchés en parallèle chaque fois à la sortie du moteur (71) correspondant.

11. Machine de coupe selon l'une des revendications 1 à 10, **caractérisée en ce qu'**à chacun des moteurs (100, 72) des modules (40, 30) ou des moteurs (72) des modules (30) est associé un limiteur de pression.

12. Machine de coupe selon l'une des revendications 1 à 11, **caractérisée en ce que** la pression Pv sur le vérin (111) d'actionnement des supports (60, 90) d'une part, les pressions Pa sur les ameneurs et Pc sur les cages d'autre part, sont réglables séparément.

13. Machine de coupe selon la revendication 12, **caractérisée en ce que** les circuits du vérin, des ameneurs et des cages sont pourvus d'une sécurité autonome, les pressions Pv, Pa et Pc étant réglées de façon autonome.

14. Machine de coupe selon la revendication 12 ou 13, **caractérisée en ce que** le vérin (111) est branché à la sortie du moteur (71) des organes de coupe, en dérivation par rapport aux moteurs (100, 72) ou aux deux moteurs (72).

15. Machine de coupe selon l'une des revendications 12 à 14, **caractérisée en ce que** le vérin (111) est relié à un bloc réduction de pression réglable (132), de sorte que la pression Pv sur ledit vérin peut être choisie dans une plage s'étendant de préférence de 12 à 100 bars.

16. Machine de coupe selon l'une des revendications 1 à 15, **caractérisée en ce que** le ou les moteurs (71) est ou sont reliés à un régulateur de débit fixe (130) ou variable.

17. Machine de coupe selon l'une des revendications 1 à 16, **caractérisée en ce que** le vérin (111) est à double-effet et associé à un tirant (115).

18. Machine de coupe selon la revendication 17, **caractérisée en ce que** les extrémités des tiges du vérin (111) et/ou du tirant (115) sont pourvues de rotules filetées permettant d'adapter à chaque fois l'éloignement ou le rapprochement des modules (30, 40) d'un axe de travail (W).

19. Machine de coupe selon l'une des revendications 1 à 18, **caractérisée en ce qu'**en phase d'interpénétration, au moins dans un espace Z ou (140), les composantes tangentielles de la vitesse de rotation des ameneurs Vtₐ du module-ameneur (40) sont supérieures aux composantes tangentielles de la vitesse de rotation Vt_{c} du module de coupe (30), ou que les composantes tangentielles de la vitesse de rotation des cages Vt_{c}' d'un module de coupe (30) sont supérieurs aux composantes tangentielles de la vitesse de rotation des cages Vt_{c} de l'autre module (30), et **en ce que** les composantes tangentielles des vitesses de rotation, soit des ameneurs Vtₐ du module (40) et des cages Vt_{c} du module (30), soit des cages Vt_{c}' d'un module (30) et des cages Vt_{c} de l'autre module (30), sont, à la périphérie desdits ameneurs et desdites cages, approximativement égales à la vitesse d'avancement V_{A} de la machine.

20. Machine de coupe selon la revendication 19, **caractérisée en ce que** le rapport Vt_{c} / Vtₐ est constant et que le rapport moyen (Vtₐ - Vt_{c} / Vtₐ )_{Zm} est inférieur à 1, de préférence de l'ordre de 0,35 ou que le rapport Vt_{c} / Vt_{c}' est constant et que le rapport moyen (Vt_{c}'- Vt_{c} / Vt_{c}')_{Zm} est inférieur à 1.

21. Machine de coupe selon la revendication 19 ou 20, **caractérisée en ce que**, soit les vitesses de rotation angulaires Vr_{c} des cages du module (30) et Vrₐ des ameneurs du module (40), soit les vitesses de rotation angulaires Vr_{c} des cages d'un module (30) et Vr_{c}' des cages de l'autre module (30) sont réglables au moyen du dispositif (131) et que le rapport Δ = Vr_{c} / Vrₐ ou Δ = Vr_{c} / Vr_{c}' est constant.

22. Machine de coupe selon la revendication 21, **caractérisée en ce que** le rapport Δ est inférieur à 1,0.

23. Machine de coupe selon l'une des revendications 1 à 22, **caractérisée en ce qu'**un écart E entre la face supérieure/inférieure d'une cage déterminée du module de coupe et la face inférieure/supérieure d'une cage ou d'un ameneur correspondant en phase d'interpénétration est inférieur à 16 mm. et, de préférence, de l'ordre de 7 à 9 mm.

24. Machine de coupe selon l'une des revendication 1 à 23, **caractérisée en ce qu'**au moins un outil inférieur (52) d'un dispositif (50) agencé dans la partie inférieure d'un module peut être soumis au même entraînement en rotation que celui des cages ou des ameneurs situé(e)s au-dessus de lui, soit être libre en rotation.

25. Machine de coupe selon l'une des revendication 1 à 24, **caractérisée en ce que** deux cages adjacentes (33A, 33B) sont reliées entre elles chaque fois par deux paliers (77, 78), l'un des paliers étant solidaire de la cage (33A), l'autre étant solidaire de la cage (33B), les deux paliers (77. 78) présentant des formes adaptées l'une à l'autre et étant solidaires entre eux.

26. Machine de coupe selon la revendication 25, **caractérisée en ce qu'**à chacun des paliers (77, 78) d'une cage (33) est associé un roulement (76), chaque palier étant solidaire de la bague extérieure du roulement (76) correspondant.

27. Machine de coupe selon la revendication 25 ou 26, **caractérisée en ce que** la bague intérieure de chacun des roulements (76) est solidaire d'un support (69) solidaire de l'arbre autour duquel les cages sont empilées, l'élément intérieur abrité par la cage étant solidaire dudit moyen (69).

28. Machine de coupe selon l'une des revendications 1 à 27, **caractérisée en ce que** l'outil de coupe (32) comporte un élément extérieur (33) en forme de cage et un élément de coupe intérieur abrité dans celle-ci et que l'élément (33) est constitué de deux demi-coquilles présentant une ceinture périphérique (35A) prolongée de pales (36).

29. Machine de coupe selon la revendication 28, **caractérisée en ce que** les pales (36) de l'élément (33) sont pourvues d'une fente (37) laissant le passage à l'élément intérieur, et que la fente (37) présente de préférence une zone terminale évasée (38).

30. Machine de coupe selon l'une des revendications 1 à 29, **caractérisée en ce que** l'outil ameneur (42) comporte une denture périphérique et que ladite denture périphérique (43) présente approximativement le profil d'une denture à engrenages d'angle (β).

31. Machine de coupe selon la revendication 30, **caractérisée en ce que** l'angle β des dents (43) de l'outil (42) est inférieur à 90°.

## Patentansprüche

1. Schneidmaschine, insbesondere zum Beschneiden und Vorbeschneiden von anspalierten Weinreben mit mindestens einem Schneidkopf, von denen jeder zwei Module aufweist, wobei das eine Modul ein Schneidmodul (30) mit mehreren übereinander gelagerten Schneidwerkzeugen (32) ist, die um eine Welle (31A) mit der Achse (31) angeordnet sind, und das andere Modul entweder ein anderes Schneidmodul (30) mit mehreren übereinander gelagerten Schneidwerkzeugen oder ein Zuleitungsmodul (40) ist, das mehrere übereinander gelagerte Zuleitungswerkzeuge (42) umfasst, die um eine Welle (41A) mit der Achse (41) angeordnet sind, wobei jede Werkzeugaufstapelung eines Moduls in einem Träger angeordnet ist, der um eine Achse schwenkbar ist, die parallel zur Achse des Moduls verläuft, und wobei jedes Schneidwerkzeug ein äußeres Element in Form eines Käfigs aufweist, das sich rotierend bewegen kann, und ein inneres Element, das in dem besagten Käfig untergebracht ist, wobei dieses innere Element aus einem unabhängig Schneidorgan (34) besteht, das von einem Motor (71) rotationsangetrieben wird, wobei jedes Zuleitungswerkzeug die Form einer Scheibe mit Zähnen an ihrem Umfang aufweist, die sich rotierend bewegen kann, wobei die Käfige einerseits und die Zuleitungswerkzeuge andererseits jeweils miteinander verbunden sind und die Werkzeuge eines Moduls in entsprechende Räume zwischen den Werkzeugen des anderen Moduls dank der Wirkung mindestens eines Zylinders oder gleichwertiger Mittel eindringen können, wobei die Wirkung **dadurch gekennzeichnet ist, dass** mindestens die Käfige (33) des Schneidmoduls (30) oder eines der beiden Schneidmodule einem Antrieb mit begrenztem, einstellbarem und anpassbarem Drehmoment unterliegen.

2. Schneidmaschine gemäß Anspruch 1, **dadurch gekennzeichnet, dass** die Zuleitungswerkzeuge (42) des Zuleitungsmoduls (40) oder der Käfige (33) des anderen Schneidmoduls (30) ebenfalls einem Antrieb mit begrenztem, einstellbarem und anpassbarem Drehmoment unterliegen.

3. Schneidmaschine gemäß Anspruch 2, **dadurch gekennzeichnet, dass** entweder der Motor (72) der Käfige (33) des Schneidmoduls (30) und der Motor (100) der Zuleiter (42) des Zuleitungsmoduls (40) oder die Motoren (72) der Käfige (33) der beiden Schneidmodule (30) mit einer einstellbaren Sicherheitsvorrichtung (131) verbunden sind.

4. Schneidmaschine gemäß einem der Ansprüche 1 bis 3, **dadurch gekennzeichnet, dass** das Drehmoment, das einerseits auf die Käfige (33) eines Schneidmoduls (30) ausgeübt wird, kleiner ist als das Drehmoment, das andererseits entweder auf die Zuleiter (42) des Moduls (40) oder auf die Käfige (33) des anderen Schneidmoduls (30) ausgeübt wird.

5. Schneidmaschine nach einem der Ansprüche 3 oder 4, **dadurch gekennzeichnet, dass** die einstellbare Sicherheitsvorrichtung (131) ein Mengenregler mit Druckbegrenzer ist, der es ermöglicht, einen zulässigen Grenzdruckwert innerhalb einer tarierten Spanne, die sich vorzugsweise von 50 bis 100 bar erstreckt, anzuzeigen.

6. Schneidmaschine nach einem der Ansprüche 1 bis 5, **dadurch gekennzeichnet, dass** der Motor (72) der Käfige eines Moduls (30) mit einer Regelvorrichtung (133) verbunden ist, die spezifisch das Drehmoment des besagten Motors (72) begrenzt und regelt, wobei diese Vorrichtung es ermöglicht, einen zulässigen Druckgrenzwert innerhalb einer tarierten Spanne, die sich vorzugsweise von 5 bis 40 bar erstreckt, anzuzeigen.

7. Schneidmaschine nach einem der Ansprüche 1 bis 6, **dadurch gekennzeichnet, dass** der Antrieb der Käfige (33) eines Schneidmoduls (30), der Zuleiter (42) oder der Käfige (33) des anderen Schneidmoduls (30) und der Schneidorgane (34) des oder der Schneidmodule (30) voneinander unabhängig sind.

8. Schneidmaschine nach einem der Ansprüche 1 bis 7, **dadurch gekennzeichnet, dass** die Schneidorgane (34) eines Schneidmoduls (30), die in den Käfigen (33) untergebracht sind, von einem Motor (71) rotationsangetrieben werden und dass dieser Antrieb von der Vorschubdrehzahl der Maschine unabhängig ist.

9. Schneidmaschine nach Anspruch 8, **dadurch gekennzeichnet, dass** entweder der Motor (71) der Schneidorgane (34) eines Schneidmoduls (30), der Motor (100) der Zuleiter des Zuleitungsmoduls (40) und der Motor (72) der Käfige des besagten Schneidmoduls in Reihe geschaltet sind, oder die Motoren (71) der Schneidorgane (34) und die Motoren (72) der Käfige der beiden Schneidmodule (30) in Reihe geschaltet sind.

10. Schneidmaschine nach Anspruch 8, **dadurch gekennzeichnet, dass** entweder die Motoren (100) des Moduls (40) und (72) des Moduls (30) am Ausgang des Motors (71) parallel geschaltet sind oder die Motoren (72) der Module (30) jeweils am Ausgang des entsprechenden Motors (71) parallel geschaltet sind.

11. Schneidmaschine nach einem der Ansprüche 1 bis 10, **dadurch gekennzeichnet, dass** jeder der Motoren (100, 72) der Module (40, 30) oder der Motoren (72) der Module (30) mit einem Druckbegrenzer verbunden ist.

12. Schneidmaschine nach einem der Ansprüche 1 bis 11, **dadurch gekennzeichnet, dass** der Druck Pv am Zylinder (111) zur Betätigung der Träger (60, 90) einerseits und die Drücke Pa an den Zuleitern und Pc an den Käfigen andererseits getrennt einstellbar sind.

13. Schneidmaschine nach Anspruch 12, **dadurch gekennzeichnet, dass** die Kreise des Zylinders, der Zuleiter und der Käfige mit einer selbständigen Sicherheit ausgestattet sind, wobei die Drücke Pv, Pa und Pc unabhängig geregelt werden können.

14. Schneidmaschine nach dem Anspruch 12 oder 13, **dadurch gekennzeichnet, dass** der Zylinder (111) zwischen den Motor (71) der Schneidorgane und die Motoren (100, 72) oder die beiden Motoren (72) als Abzweigung zwischengeschaltet ist.

15. Schneidmaschine nach einem der Ansprüche 12 bis 14, **dadurch gekennzeichnet, dass** der Zylinder (111) mit einem einstellbaren Druckminderungsblock (132) verbunden ist, so dass der Druck Pv an dem besagten Ventil innerhalb einer Spanne zwischen vorzugsweise 12 und 100 bar gewählt werden kann.

16. Schneidmaschine nach einem der Ansprüche 1 bis 15, **dadurch gekennzeichnet, dass** der oder die Motoren (71) mit einem Mengenregler mit fester (130) oder veränderbarer Stellgröße verbunden ist (sind).

17. Schneidmaschine nach einem der Ansprüche 1 bis 16, **dadurch gekennzeichnet, dass** der Zylinder (111) ein doppeltwirkender Zylinder ist und mit einer Zugstange (115) verbunden ist.

18. Schneidmaschine nach Anspruch 17, **dadurch gekennzeichnet, dass** die Enden der Zylinderstange (111) und/oder der Zugstange (115) mit Kugelgelenken mit Gewinde bestückt sind, die es jeweils ermöglichen, die Entfernung oder Annäherung der Module (30, 40) an eine Arbeitsachse (W) anzupassen.

19. Schneidmaschine nach einem der Ansprüche 1 bis 18, **dadurch gekennzeichnet, dass** die tangentialen Drehzahlkomponenten der Zuleiter Vta des Zuleitungsmoduls (40) in der Eindringungsphase mindestens in einem Raum Z bzw. (140) größer sind als die tangentialen Drehzahlkomponenten Vtc des Schneidmoduls (30), oder dass die tangentialen Drehzahlkomponenten der Käfige Vtc' eines Schneidmoduls (30) größer sind als die tangentialen Drehzahlkomponenten der Käfige Vtc des anderen Moduls (30), und **dadurch gekennzeichnet, dass** die tangentialen Drehzahlkomponenten entweder der Zuleiter Vta des Moduls (40) und der Käfige Vtc des Moduls (30) oder der Käfige Vtc' eines Moduls (30) und der Käfige Vtc eines anderen Moduls (30) am Umfang der besagten Zuleiter und der besagten Käfige annähernd der Vorschubgeschwindigkeit VA der Maschine entsprechen.

20. Schneidmaschine nach dem Anspruch 19, **dadurch gekennzeichnet, dass** das Verhältnis Vtc/Vta konstant ist und dass das durchschnittliche Verhältnis (Vta - Vtc/Vta)Zm kleiner 1 ist, vorzugsweise in der Größenordnung von 0,35, oder dass das Verhältnis Vtc/Vtc' konstant ist und das durchschnittliche Verhältnis (Vtc'-Vtc/Vtc')_{zm} kleiner 1 ist.

21. Schneidmaschine nach Anspruch 19 oder 20, **dadurch gekennzeichnet, dass** entweder die Winkeldrehgeschwindigkeit Vrc der Käfige des Moduls (30) und Vra der Zuleiter des Moduls (40) oder die Winkeldrehgeschwindigkeit Vrc der Käfige eines Moduls (30) und Vrc' der Käfige des anderen Moduls (30) über die Vorrichtung (131) einstellbar sind, und dass das Verhältnis Δ = Vrc/Vra oder Δ = Vrc/Vrc' konstant ist.

22. Schneidmaschine nach dem Anspruch 21, **dadurch gekennzeichnet, dass** das Verhältnis Δ kleiner 1,0 ist.

23. Schneidmaschine nach einem der Ansprüche 1 bis 22, **dadurch gekennzeichnet, dass** der Abstand E zwischen der oberen/unteren Fläche eines bestimmten Käfigs des Schneidmoduls und der unteren/oberen Fläche eines Käfigs oder eines entsprechenden Zuleiters in der Eindringunsphase weniger als 16 mm aufweist und vorzugsweise in der Größenordnung zwischen 7 und 9 mm liegt.

24. Schneidmaschine nach einem der Ansprüche 1 bis 23, **dadurch gekennzeichnet, dass** mindestens ein unteres Werkzeug (52) einer Vorrichtung (50), das im unteren Teil eines Moduls angeordnet ist, den gleichen Drehantrieb erfahren kann, wie das der Käfige oder der darüber liegenden Zuleiter, oder aber sich frei drehen kann.

25. Schneidmaschine nach einem der Ansprüche 1 bis 24, **dadurch gekennzeichnet, dass** die beiden benachbarten Käfige (33A, 33B) jeweils über zwei Lager (77, 78) miteinander verbunden sind, wobei eines der Lager fest mit dem Käfig (33A) und das andere fest mit dem Käfig (33B) verbunden ist, wobei die beiden Lager (77, 78) sich anschmiegende Formen aufweisen und miteinander verbunden sind.

26. Schneidmaschine nach dem Anspruch 25, **dadurch gekennzeichnet, dass** jedes der Lager (77, 78) eines Käfigs (33) mit einem Wälzlager (76) verbunden ist, wobei jedes Lager fest mit dem Außenring des entsprechenden Wälzlagers (76) verbunden ist.

27. Schneidmaschine nach dem Anspruch 25 oder 26, **dadurch gekennzeichnet, dass** der Innenring eines jeden Wälzlagers (76) fest mit einem Träger (69) verbunden ist, der mit der Welle verbunden ist, um die herum die Käfige übereinander gelagert angebracht sind, wobei das innere Element, das in dem Käfig untergebracht ist, mit der besagten Vorrichtung (69) verbunden ist.

28. Schneidmaschine nach einem der Ansprüche 1 bis 27, **dadurch gekennzeichnet, dass** das Schneidwerkzeug (32) ein äußeres Element (33) in Form eines Käfigs und ein inneres Schneidelement aufweist, das in diesem Käfig untergebracht ist, und dass das Element (33) aus zwei Halbschalen besteht, die an ihrem Umfang einen Gürtel aufweisen (35A), in dessen Verlängerung sich Blätter (36) befinden.

29. Schneidmaschine nach Anspruch 28, **dadurch gekennzeichnet, dass** die Blätter (36) des Elements (33) einen Schlitz (37) aufweisen, der einen Durchgang für ein inneres Element lässt, und dass der Schlitz (37) vorzugsweise eine konische Erweiterung (38).

30. Schneidmaschine nach einem der Ansprüche 1 bis 29, **dadurch gekennzeichnet, dass** das Zuleitungsmodul (42) an seinem Umfang eine umlaufende Zahnung aufweist und dass die besagte Zahnung (43) annähernd das Profil einer Getriebezahnung mit dem Winkel (β) aufweist.

31. Schneidmaschine nach Anspruch 30, **dadurch gekennzeichnet, dass** der Winkel β der Zähne (43) des Werkzeugs (42) weniger als 90° beträgt.

## Claims

1. A cutting machine for use particularly in pruning and pre-pruning trellised vines and including at least one cutting head each having two assemblies, one being a cutting assembly (30) comprising a plurality of cutting tools (32) superposed and arranged around a shaft (31A) of axis (31), the other assembly being, either another cutting assembly (30) comprising a plurality of superposed cutting tools, or a feeder-assembly (40) comprising a plurality of feeder-tools (42) superposed and arranged around a shaft (41A) of axis (41), each stack of tools of a assembly being provided in a support which can swivel around an axis parallel to the assembly axis, each cutting tool comprising an outer component in the form of a cage having an aptitude for a rotation motion and an inner component housed in said cage, this inner component being formed by an independent cutting component (34) rotated by a motor (71), each feeder-tool having the shape of a disk with peripheral teeth and having an aptitude for a rotational motion, the cages, on the one hand, and the feeder-tools, on the other hand, being integral with each other, and the tools of a assembly being able to interpenetrate in corresponding spaces provided between the tools of the other assembly thanks to the action of at least one jack or equivalent means, **characterised in that** at least the cages (33) of the cutting assembly (30) or of one of the two cutting assemblies are subject to a drive with limited, adjustable and adaptable torque.

2. A cutting machine according to claim 1, **characterised in that** the feeder-tools (42) of the feeder-assembly (40) or the cages (33) of the other cutting assembly (30) are also subject to a drive with limited, adjustable and adaptable torque.

3. A cutting machine according to claim 2, **characterised in that** either the motor (72) of the cages (33) of the cutting assembly (30) and the motor (100) of the feeders (42) of the feeder-assembly (40), or the motors (72) of the cages (33) of the two cutting assemblies (30) are connected to an adjustable safety device (131).

4. A cutting machine according to one of claims 1 to 3, **characterised in that** the torque exerted on the cages (33) of one cutting assembly (30), on the one hand, is lower than that exerted, either on the feeders (42) of the assembly (40), or on the cages (33) of the other cutting assembly (30), on the other hand.

5. A cutting machine according to claim 3 or 4, **characterised in that** the adjustable safety device (131) is a flow rate control unit with pressure relief valve allowing an admissible pressure limit to be displayed within a calibrated range extending preferably from 50 to 100 bars.

6. A cutting machine according to one of claims 1 to 5, **characterised in that** the motor (72) of the cages of an assembly (30) is connected to an adjustment device (133) reducing and adjusting specifically the torque of said motor (72), this device allowing an admissible pressure limit to be displayed within a calibrated range extending preferably from 5 to 40 bars.

7. A cutting machine according to one of claims 1 to 6, **characterised in that** the drive of the cages (33) of a cutting assembly (30), of the feeders (42) or of the cages (33) of the other cutting assembly (30) and the cutting components (34) of the cutting assembly or assemblies (30) are independent of each other.

8. A cutting machine according to one of claims 1 to 7, **characterised in that** the cutting components (34) of a cutting assembly (30), housed in the cages (33), are rotated by a motor (71) and that this drive is independent of the rate of thrust of the machine.

9. A cutting machine according to claim 8, **characterised in that**, either the motor (71) of the cutting components (34) of a cutting assembly (30), the motor (100) of the feeders of the feeder-assembly (40) and the motor (72) of the cages of said cutting assembly are connected in series, or the motors (71) of the cutting components (34) and the motors (72) of the cages of the two cutting assemblies (30) are connected in series.

10. A cutting machine according to claim 8, **characterised in that**, either the motors (100) of the assembly (40) and (72) of the assembly (30) are connected in parallel at the output of the motor (71), or the motors (72) of the assemblies (30) are connected in parallel each time at the output of the corresponding motor (71).

11. A cutting machine according to one of claims 1 to 10, **characterised in that** with each of the motors (100, 72) of the assemblies (40, 30) or of the motors (72) of the assemblies (30) is associated a pressure relief valve.

12. A cutting machine according to one of claims 1 to 11, **characterised in that** the pressure Pv on the jack (111) activating the supports (60, 90) on the one hand, the pressures Pa on the feeders and Pc on the cages on the other hand, are adjustable separately.

13. A cutting machine according to claim 12, **characterised in that** the circuits of the jack, feeders and cages are provided with autonomous safety, the pressures Pv, Pa and Pc being adjusted autonomously.

14. A cutting machine according to claim 12 or 13, **characterised in that** the jack (111) is connected to the output of the motor (71) of the cutting components, in shunt relative to the motors (100, 72) or to the two motors (72).

15. A cutting machine according to one of claims 12 to 14, **characterised in that** the jack (111) is connected to an adjustable pressure reduction unit (132) such that the pressure Pv on said jack may be chosen in a range preferably extending from 12 to 100 bars.

16. A cutting machine according to one of claims 1 to 15, **characterised in that** the motor or motors (71) is or are connected to a fixed or variable flow control unit (130).

17. A cutting machine according to one of claims 1 to 16, **characterised in that** the jack (111) is double acting and associated with a tie rod (115).

18. A cutting machine according to claim 17, **characterised in that** the ends of the rods of the jack (111) and/or of the tie rod (115) are provided with threaded ball joints making it possible to adapt each time the separation or approach of the assemblies (30, 40) from or to a work axis (W).

19. A cutting machine according to one of claims 1 to 18, **characterised in that** in the interpenetration phase, at least in a space Z or (140), the tangential components of the rotation speed of the feeders Vtₐ of the feeder-assembly (40) are greater than the tangential components of the rotation speed Vt_{c} of the cutting assembly (30), or that the tangential components of the rotation speed of the cages Vt_{c}' of a cutting assembly (30) are greater than the tangential components of the rotation speed of the cages Vt_{c} of the other assembly (30), and **in that** the tangential components of the rotation speeds, either of the feeders Vtₐ of the assembly (40) and of the cages Vt_{c} of the assembly (30), or of the cages Vt_{c}' of one assembly (30) and of the cages Vt_{c} of the other assembly (30) are, on the periphery of said feeders and said cages, approximately equal to the rate of thrust V_{A} of the machine.

20. A cutting machine according to claim 19, **characterised in that** the Vt_{c}/Vtₐ ratio is constant and that the mean ratio (Vtₐ-Vt_{c}/Vtₐ )_{zm} is less than 1, preferably about 0.35 or that the Vt_{c}/Vt_{c}' ratio is constant and that the mean ratio (Vt_{c}'-Vt_{c}/ Vt_{c}')_{Zm} is less than 1.

21. A cutting machine according to claim 19 or 20, **characterised in that**, either the angular rotation speeds Vr_{c} of the cages of the assembly (30) and Vrₐ of the feeders of the assembly (40), or the angular rotation speeds Vr_{c} of the cages of one assembly (30) and Vr_{c}' of the cages of the other assembly (30) are adjustable by means of the device (131) and that the ratio Δ = Vr_{c}/Vrₐ or Δ = Vr_{c}/Vr_{c}' is constant.

22. A cutting machine according to claim 21, **characterised in that** the Δ ratio is less than 1.0.

23. A cutting machine according to one of claims 1 to 22, **characterised in that** a distance E between the upper/lower face of a given cage of the cutting assembly and the lower/upper face of a corresponding cage or feeder in the interpenetration phase is less than 16 mm. and, preferably, about 7 to 9 mm.

24. A cutting machine according to one of claims 1 to 23, **characterised in that** at least one lower tool (52) of a device (50) provided in the lower part of an assembly may be subject to the same rotation as that of the cages or feeders located above it, i.e. be freely rotating.

25. A cutting machine according to one of claims 1 to 24, **characterised in that** two adjacent cages (33A, 33B) are connected to each other each time by two bearing blocks (77, 78), one of the bearing blocks being integral with the cage (33A), the other being integral with the cage (33B), the two bearing blocks (77, 78) having forms adapted to each other and being integral with each other.

26. A cutting machine according to claim 25, **characterised in that** with each of the bearing blocks (77, 78) of a cage (33) is associated a bearing (76), each bearing block being integral with the external collar of the corresponding bearing (76).

27. A cutting machine according to claim 25 or 26, **characterised in that** the inner collar of each of the bearings (76) is integral with a support (69) integral with the shaft around which the cages are stacked, the inner component housed by the cage being integral with said means (69).

28. A cutting machine according to one of claims 1 to 27, **characterised in that** the cutting tool (32) comprises an outer component (33) in the form of a cage and an inner cutting component housed in it and that the component (33) is constituted by two half-shells having a peripheral belt (35A) extended by blades (36).

29. A cutting machine according to claim 28, **characterised in that** the blades (36) of the component (33) are provided with a slot (37) allowing the inner component to pass through, and that the slot (37) preferably has a flared end zone (38).

30. A cutting machine according to one of claims 1 to 29, **characterised in that** the feeder tool (42) comprises peripheral teeth and that said peripheral teeth (43) have approximately the profile of geared teeth of angle (β).

31. A cutting machine according to claim 30, **characterised in that** the angle β of the teeth (43) of the tool (42) is less than 90°.
